# EUROPEAN PATENT APPLICATION

(11) **EP 4 572 177 A1**
(43) Date of publication of application: **18.06.2025**
(21) Application number: 23851644.7
(22) Date of filing: 01.08.2023
(51) Int. Cl.: H04B 7/08, H04L 5/00

(54) **TRANSMISSION CONFIGURATION INDICATOR (TCI) STATE INDICATION METHOD AND APPARATUS**

(30) Priority: 12.08.2022 CN 202210969354
(71) Applicant: Datang Mobile Communications Equipment Co., Ltd., Beijing 100085 (CN)
(72) Inventor: LI, Hui, Beijing 100085 (CN); SU, Xin, Beijing 100085 (CN); GAO, Qiubin, Beijing 100085 (CN); LUO, Yajuan, Beijing 100085 (CN); SONG, Lei, Beijing 100085 (CN); HUANG, Qiuping, Beijing 100085 (CN)
(74) Representative: Studio Torta S.p.A.
(86) International application number: PCT/CN2023/110491
(87) International publication number: WO 2024/032423

(57) **Abstract**

Embodiments of the present disclosure provide a transmission configuration indicator (TCI) state indication method. The method applied to a terminal comprises: receiving TCI state indication information sent by a base station; and updating a target state of a component carrier (CC) or a bandwidth part in a CC list on the basis of the TCI state indication information, wherein the CC list is preconfigured by the base station for the terminal, the CC list corresponds to a plurality of TCI states or a plurality of TCI state groups, there is one or more CC lists, and the target state of the CC or the bandwidth part comprises: a TCI state of the CC, a TCI state group of the CC, a TCI state of the bandwidth part, or a TCI state group of the bandwidth part. The TCI state indication method and apparatus provided by the embodiments of the present disclosure reduce the TCI state indication signaling overhead, and ensure the transmission of mTRP.

## Description

### CROSS-REFERENCES TO RELATED APPLICATIONS

The present application claims priority to Chinese Patent Application No. 202210969354.1, filed on August 12, 2022, entitled "Beam Indication Method and Apparatus", which is hereby incorporated by reference in its entirety.

### FIELD

The present application relates to the field of communication, and in particular, to methods and apparatuses for transmission configuration indicator (TCI) state indication.

### BACKGROUND

Taking a carrier aggregation scenario as an example, for a multi-transmission reception point (mTRP) scenario, different component carriers (CCs)/bandwidth parts (BWPs) may be adopted for single-transmission reception point (sTRP) or mTRP transmission. Further, mTRP transmission using different CCs may also be configured as single-downlink control information (S-DCI) based mTRP transmission or multi-downlink control information (M-DCI) based mTRP transmission.

However, in the related art, in a mTRP scenario, a downlink control information (DCI) signaling indicates that a CC updates a transmission configuration indicator (TCI) state. In case that a CC for a same TRP is updated, multiple DCI signalings are required, which results in large signaling overhead.

### BRIEF SUMMARY

In view of problems in the related art, embodiments of the present application provide methods and apparatuses for transmission configuration indicator (TCI) state indication.

An embodiment of the present application provides a method for transmission configuration indicator (TCI) state indication, performed by a terminal, including:
receiving TCI state indication information transmitted from a base station; and
updating a target state of a component carrier (CC) or a bandwidth part in a CC list based on the TCI state indication information,
where the CC list is pre-configured by the base station for the terminal, the CC list corresponds to multiple TCI states or multiple TCI state groups, a quantity of the CC list is one or multiple, and the target state of the CC or the bandwidth part includes: a TCI state of a CC, a TCI state group of a CC, a TCI state of a bandwidth part, or a TCI state group of a bandwidth part.

In an embodiment, the CC list includes any one or a combination of the following types:
a CC list configured for each transmission reception point (TRP) respectively;
a CC list configured based on a transmission reception point (TRP)transmission type corresponding to a CC or a bandwidth part; or
a CC list configured based on a downlink control information (DCI) mode.

In an embodiment, updating the target state of the CC or the bandwidth part in the CC list based on the TCI state indication information includes:
updating a target state of a CC or a bandwidth part corresponding to a transmission reception point (TRP) corresponding to the TCI state indication information based on the TCI state indication information.

In an embodiment, the CC or the bandwidth part in the CC list includes:
a CC or a bandwidth part in a single-downlink control information (S-DCI) mode; and/or
a CC or a bandwidth part in a multi-downlink control information (M-DCI) mode; and
where updating the target state of the CC or the bandwidth part in the CC list based on the TCI state indication information includes:
in case that DCI where the TCI state indication information is located is S-DCI, updating a target state of a first CC or bandwidth part corresponding to the S-DCI, where the first CC or bandwidth part is a CC or a bandwidth part in the S-DCI mode in the CC list; or
in case that DCI where the TCI state indication information is located is M-DCI, updating a target state of a second CC or bandwidth part corresponding to the M-DCI, where the second CC or bandwidth part is a CC or a bandwidth part in the M-DCI mode in the CC list.

In an embodiment, the method further includes:
determining a DCI signaling type of the DCI where the TCI state indication information is located based on a given first correspondence relationship and a resource set where the TCI state indication information is located; and/or
determining a transmission reception point (TRP) corresponding to the TCI state indication information based on a given second correspondence relationship and a resource set where the TCI state indication information is located,
where the first correspondence relationship is a correspondence relationship between the resource set and the DCI signaling type, and the second correspondence relationship is a correspondence relationship between the resource set and a TRP.

In an embodiment, the TCI state indication information is used to indicate a TCI state or a TCI state group.

An embodiment of the present application provides a method for transmission configuration indicator (TCI) state indication, performed by a base station, including:
transmitting TCI state indication information to a terminal, where the TCI state indication information is used to indicate the terminal to update a target state of a component carrier (CC) or a bandwidth part in a CC list,
where the CC list is pre-configured by the base station for the terminal, the CC list corresponds to multiple TCI states or multiple TCI state groups, and the target state of the CC or the bandwidth part includes: a TCI state of a CC, a TCI state group of a CC, a TCI state of a bandwidth part, or a TCI state group of a bandwidth part.

In an embodiment, the CC list includes any one or a combination of the following types:
a CC list configured for each transmission reception point (TRP) respectively;
a CC list configured based on a transmission reception point (TRP) transmission type corresponding to a CC or a bandwidth part; or
a CC list configured based on a downlink control information (DCI) mode.

In an embodiment, the TCI state indication information is used to update a target state of a CC or a bandwidth part corresponding to a transmission reception point (TRP) corresponding to the TCI state indication information based on the TCI state indication information.

In an embodiment, the CC or the bandwidth part in the CC list includes:
a CC or a bandwidth part in a single-downlink control information (S-DCI) mode; and/or
a CC or a bandwidth part in a multi-downlink control information (M-DCI) mode; and
where in case that DCI where the TCI state indication information is located is S-DCI, the TCI state indication information is used to update a target state of a first CC or bandwidth part corresponding to the S-DCI, where the first CC or bandwidth part is a CC or a bandwidth part in the S-DCI mode in the CC list; or
in case that DCI where the TCI state indication information is located is M-DCI, the TCI state indication information is used to update a target state of a second CC or bandwidth part corresponding to the M-DCI, where the second CC or bandwidth part is a CC or a bandwidth part in the M-DCI mode in the CC list.

In an embodiment, the method further includes:
configuring a first correspondence relationship and/or a second correspondence relationship for the terminal,
where the first correspondence relationship is a correspondence relationship between a resource set and a DCI signaling type, and is used to determine a DCI signaling type of the DCI where the TCI state indication information is located; and the second correspondence relationship is a correspondence relationship between the resource set and a TRP, and is used to determine a transmission reception point (TRP) corresponding to the TCI state indication information.

In an embodiment, the TCI state indication information is used to indicate a TCI state or a TCI state group.

An embodiment of the present application further provides an apparatus for transmission configuration indicator (TCI) state indication, for use in a terminal, including:
a first receiving unit, used for receiving TCI state indication information transmitted from a base station; and
a first updating unit, used for updating a target state of a component carrier (CC) or a bandwidth part in a CC list based on the TCI state indication information,
where the CC list is pre-configured by the base station for the terminal, the CC list corresponds to multiple TCI states or multiple TCI state groups, a quantity of the CC list is one or multiple, and the target state of the CC or the bandwidth part includes: a TCI state of a CC, a TCI state group of a CC, a TCI state of a bandwidth part, or a TCI state group of a bandwidth part.

In an embodiment, the CC list includes any one or a combination of the following types:
a CC list configured for each transmission reception point (TRP) respectively;
a CC list configured based on a transmission reception point (TRP) transmission type corresponding to a CC or a bandwidth part; or
a CC list configured based on a downlink control information (DCI) mode.

In an embodiment, updating the target state of the CC or the bandwidth part in the CC list based on the TCI state indication information includes:
updating a target state of a CC or a bandwidth part corresponding to a transmission reception point (TRP) corresponding to the TCI state indication information based on the TCI state indication information.

In an embodiment, the CC or the bandwidth part in the CC list includes:
a CC or a bandwidth part in a single-downlink control information (S-DCI) mode; and/or
a CC or a bandwidth part in a multi-downlink control information (M-DCI) mode; and
where updating the target state of the CC or the bandwidth part in the CC list based on the TCI state indication information includes:
in case that DCI where the TCI state indication information is located is S-DCI, updating a target state of a first CC or bandwidth part corresponding to the S-DCI, where the first CC or bandwidth part is a CC or a bandwidth part in the S-DCI mode in the CC list; or
in case that DCI where the TCI state indication information is located is M-DCI, updating a target state of a second CC or bandwidth part corresponding to the M-DCI, where the second CC or bandwidth part is a CC or a bandwidth part in the M-DCI mode in the CC list.

In an embodiment, the apparatus further includes a first determining unit, where the first determining unit is used for:
determining a DCI signaling type of the DCI where the TCI state indication information is located based on a given first correspondence relationship and a resource set where the TCI state indication information is located; and/or
determining a transmission reception point (TRP) corresponding to the TCI state indication information based on a given second correspondence relationship and a resource set where the TCI state indication information is located,
where the first correspondence relationship is a correspondence relationship between the resource set and the DCI signaling type, and the second correspondence relationship is a correspondence relationship between the resource set and a TRP.

In an embodiment, the TCI state indication information is used to indicate a TCI state or a TCI state group.

An embodiment of the present application further provides an apparatus for transmission configuration indicator (TCI) state indication, for use in a base station, including:
a second transmitting unit, used for transmitting TCI state indication information to a terminal, where the TCI state indication information is used to indicate the terminal to update a target state of a component carrier (CC) or a bandwidth part in a CC list,
where the CC list is pre-configured by the base station for the terminal, the CC list corresponds to multiple TCI states or multiple TCI state groups, and the target state of the CC or the bandwidth part includes: a TCI state of a CC, a TCI state group of a CC, a TCI state of a bandwidth part, or a TCI state group of a bandwidth part.

In an embodiment, the CC list includes any one or a combination of the following types:
a CC list configured for each transmission reception point (TRP) respectively;
a CC list configured based on a transmission reception point (TRP) transmission type corresponding to a CC or a bandwidth part; or
a CC list configured based on a downlink control information (DCI) mode.

In an embodiment, the TCI state indication information is used to update a target state of a CC or a bandwidth part corresponding to a transmission reception point (TRP) corresponding to the TCI state indication information based on the TCI state indication information.

In an embodiment, the CC or the bandwidth part in the CC list includes:
a CC or a bandwidth part in a single-downlink control information (S-DCI) mode; and/or
a CC or a bandwidth part in a multi-downlink control information (M-DCI) mode; and
where in case that DCI where the TCI state indication information is located is S-DCI, the TCI state indication information is used to update a target state of a first CC or bandwidth part corresponding to the S-DCI, where the first CC or bandwidth part is a CC or a bandwidth part in the S-DCI mode in the CC list; or
in case that DCI where the TCI state indication information is located is M-DCI, the TCI state indication information is used to update a target state of a second CC or bandwidth part corresponding to the M-DCI, where the second CC or bandwidth part is a CC or a bandwidth part in the M-DCI mode in the CC list.

In an embodiment, the apparatus further includes a third transmitting unit, where the third transmitting unit is used for configuring a first correspondence relationship and/or a second correspondence relationship for the terminal,
where the first correspondence relationship is a correspondence relationship between a resource set and a DCI signaling type, and is used to determine a DCI signaling type of the DCI where the TCI state indication information is located; and the second correspondence relationship is a correspondence relationship between the resource set and a TRP, and is used to determine a transmission reception point (TRP) corresponding to the TCI state indication information.

In an embodiment, the TCI state indication information is used to indicate a TCI state or a TCI state group.

An embodiment of the present application further provides a terminal, including a memory, a transceiver and a processor,
where the memory is used for storing a computer program, the transceiver is used for receiving and transmitting data under control of the processor, and the processor is used for reading the computer program in the memory and performing the following operations:
receiving transmission configuration indicator (TCI) state indication information transmitted from a base station; and
updating a target state of a component carrier (CC) or a bandwidth part in a CC list based on the TCI state indication information,
where the CC list is pre-configured by the base station for the terminal, the CC list corresponds to multiple TCI states or multiple TCI state groups, a quantity of the CC list is one or multiple, and the target state of the CC or the bandwidth part includes: a TCI state of a CC, a TCI state group of a CC, a TCI state of a bandwidth part, or a TCI state group of a bandwidth part.

In an embodiment, the CC list includes any one or a combination of the following types:
a CC list configured for each transmission reception point (TRP) respectively;
a CC list configured based on a transmission reception point (TRP) transmission type corresponding to a CC or a bandwidth part; or
a CC list configured based on a downlink control information (DCI) mode.

In an embodiment, updating the target state of the CC or the bandwidth part in the CC list based on the TCI state indication information includes:
updating a target state of a CC or a bandwidth part corresponding to a transmission reception point (TRP) corresponding to the TCI state indication information based on the TCI state indication information.

In an embodiment, the CC or the bandwidth part in the CC list includes:
a CC or a bandwidth part in a single-downlink control information (S-DCI) mode; and/or
a CC or a bandwidth part in a multi-downlink control information (M-DCI) mode; and
where updating the target state of the CC or the bandwidth part in the CC list based on the TCI state indication information includes:
   in case that DCI where the TCI state indication information is located is S-DCI, updating a target state of a first CC or bandwidth part corresponding to the S-DCI, where the first CC or bandwidth part is a CC or a bandwidth part in the S-DCI mode in the CC list; or
   in case that DCI where the TCI state indication information is located is M-DCI, updating a target state of a second CC or bandwidth part corresponding to the M-DCI, where the second CC or bandwidth part is a CC or a bandwidth part in the M-DCI mode in the CC list.

In an embodiment, the operations further include:
determining a DCI signaling type of the DCI where the TCI state indication information is located based on a given first correspondence relationship and a resource set where the TCI state indication information is located; and/or
determining a transmission reception point (TRP) corresponding to the TCI state indication information based on a given second correspondence relationship and a resource set where the TCI state indication information is located,
where the first correspondence relationship is a correspondence relationship between the resource set and the DCI signaling type, and the second correspondence relationship is a correspondence relationship between the resource set and a TRP.

In an embodiment, the TCI state indication information is used to indicate a TCI state or a TCI state group.

An embodiment of the present application further provides a base station, including a memory, a transceiver and a processor,
where the memory is used for storing a computer program, the transceiver is used for receiving and transmitting data under control of the processor, and the processor is used for reading the computer program in the memory and performing the following operations:
transmitting transmission configuration indicator (TCI) state indication information to a terminal, where the TCI state indication information is used to indicate the terminal to update a target state of a component carrier (CC) or a bandwidth part in a CC list,
where the CC list is pre-configured by the base station for the terminal, the CC list corresponds to multiple TCI states or multiple TCI state groups, and the target state of the CC or the bandwidth part includes: a TCI state of a CC, a TCI state group of a CC, a TCI state of a bandwidth part, or a TCI state group of a bandwidth part.

In an embodiment, the CC list includes any one or a combination of the following types:
a CC list configured for each transmission reception point (TRP) respectively;
a CC list configured based on a transmission reception point (TRP) transmission type corresponding to a CC or a bandwidth part; or
a CC list configured based on a downlink control information (DCI) mode.

In an embodiment, the TCI state indication information is used to update a target state of a CC or a bandwidth part corresponding to a transmission reception point (TRP) corresponding to the TCI state indication information based on the TCI state indication information.

In an embodiment, the CC or the bandwidth part in the CC list includes:
a CC or a bandwidth part in a single-downlink control information (S-DCI) mode; and/or
a CC or a bandwidth part in a multi-downlink control information (M-DCI) mode; and
where in case that DCI where the TCI state indication information is located is S-DCI, the TCI state indication information is used to update a target state of a first CC or bandwidth part corresponding to the S-DCI, where the first CC or bandwidth part is a CC or a bandwidth part in the S-DCI mode in the CC list; or
in case that DCI where the TCI state indication information is located is M-DCI, the TCI state indication information is used to update a target state of a second CC or bandwidth part corresponding to the M-DCI, where the second CC or bandwidth part is a CC or a bandwidth part in the M-DCI mode in the CC list.

In an embodiment, the operations further include:
configuring a first correspondence relationship and/or a second correspondence relationship for the terminal,
where the first correspondence relationship is a correspondence relationship between a resource set and a DCI signaling type, and is used to determine a DCI signaling type of the DCI where the TCI state indication information is located; and the second correspondence relationship is a correspondence relationship between the resource set and a TRP, and is used to determine a transmission reception point (TRP) corresponding to the TCI state indication information.

In an embodiment, the TCI state indication information is used to indicate a TCI state or a TCI state group.

An embodiment of the present application further provides a processor-readable storage medium storing a computer program, where the computer program is used to cause a processor to perform steps of the methods for TCI state indication described above.

In the methods and apparatuses for TCI state indication provided by the embodiments of the present application, by pre-configuring one or more CC lists, where the CC lists correspond to different TCIs or TCI state groups, receiving TCI state indication information transmitted from the base station, and updating a state (a TCI state or a TCI state group) in the CC list based on the TCI state indication information, the CC/BWP corresponding to one or multiple TRPs is updated using one piece of TCI state indication information. By the method for TCI state indication provided by the embodiment of the present application, signaling overhead of the TCI state indication is reduced and mTRP transmission is ensured.

### BRIEF DESCRIPTION OF THE DRAWINGS

To illustrate solutions in the embodiments of the present application or the related art more clearly, the drawings used in the descriptions of the embodiments or the related art will be briefly described below. The drawings in the following description are some embodiments of the present application, and other drawings may be obtained based on these drawings without any creative work for those skilled in the related art.
FIG. 1 is a first schematic flowchart of a method for transmission configuration indicator (TCI) state indication according to an embodiment of the present application;
FIG. 2 is a second schematic flowchart of a method for transmission configuration indicator (TCI) state indication according to an embodiment of the present application;
FIG. 3 is a first schematic structural diagram of an apparatus for transmission configuration indicator (TCI) state indication according to an embodiment of the present application;
FIG. 4 is a second schematic structural diagram of an apparatus for transmission configuration indicator (TCI) state indication according to an embodiment of the present application;
FIG. 5 is a schematic structural diagram of a terminal according to an embodiment of the present application; and
FIG. 6 is a schematic structural diagram of a base station according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions according to the embodiments of the present application may be applicable to various systems, especially a 5G system. For example, applicable systems may be a global system of mobile communication (GSM) system, a code division multiple access (CDMA) system, a wideband code division multiple access (WCDMA) general packet wireless service (general packet radio service, GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. These various systems include a terminal device and a network device. The system may further include a core network part, such as an evolved packet system (EPS), a 5th generation mobile communication technology system (5GS), and the like.

The terminal device (for example, a user equipment (UE)) involved in the embodiments of the present application may be a device that provides voice and/or data connectivity to a user, a handheld device with a wireless connection function, or other processing device connected to a wireless modem. In different systems, the names of the terminal device may be different. For example, in the 5G system, the terminal device may be called as a UE. A wireless terminal device may communicate with one or more core networks (CNs) via a radio access network (RAN), and the wireless terminal device may be a mobile terminal, such as a mobile phone (or "cellular "phone) and computers with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, and a user device, which are not limited in the embodiments of the present application.

The network device involved in the embodiments of the present application may be a base station, and the base station may include multiple cells providing services for a terminal. Depending on specific application scenarios, the base station may also be referred as to an access point, or may be a device in the access network that communicates with a wireless terminal device through one or more sectors on the air interface, or other names. The network device may be used to mutually exchange received air frames with Internet Protocol (IP) packets, and act as a router between a wireless terminal device and a rest part of the access network, and the rest part of the access network may include an Internet protocol (IP) communication network. The network device may also coordinate attribute management for an air interface. For example, the network device involved in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node (relay node), a femto, a pico base station (pico), etc., which are not limited in the embodiments of the present application. In some network structures, a network device may include a centralized unit (CU) node and a distributed unit (DU) node, and the centralized unit and the distributed unit may also be geographically separated.

In order to facilitate understanding of embodiments of the present application, terms or background associated with the embodiments of the present application are introduced below.

In a new radio (NR) system, downlink channels include a downlink data channel (physical downlink shared channel, PDSCH), a downlink control channel (physical downlink control channel, PDCCH), and uplink channels include an uplink data channel (physical uplink shared channel, PUSCH), and an uplink control channel (physical uplink control channel, PUCCH). For high-frequency transmission (frequency range 2 (FR2) in NR), due to the limited transmission range, the uplink and downlink channels are usually transmitted after being beamformed to enhance coverage. To determine the beam direction of different channels, it is required to use signaling to indicate the beam during channel transmission, that is, beam indication (indicating beam information through a transmission configuration indicator (TCI) state). In the related art, different channels use different TCI state indication signalings, and each channel independently performs TCI state indication. As such, different channels may be transmitted using respective different beams. The separate TCI state indication method increases system complexity and signaling indication overhead.

In view of the above problem, a method for indicating multiple channel beams using TCI state indication signaling is introduced, a group of TCI states are activated through medium access control-control element (MAC-CE), and then downlink control information (DCI) is used to indicate a state of one of the activated TCIs. In case that the uplink and downlink channels are reciprocal, a beam indicated by the TCI state indication signaling may be used for both the uplink channels and the downlink channels, and this configuration is a joint TCI mode. In case that a maximum permissible exposure (MPE) problem caused by human body blockage occurs or the terminal needs to switch an uplink beam, the uplink channel will use a beam different from the downlink channel, the TCI state indication signaling needs to indicate the uplink channel beam and the downlink channel beam respectively, and the configuration is a separate uplink and downlink TCI mode (separate DL/UL TCI mode).

For multi-transmission reception point (mTRP) transmission, in the related art, each signaling only indicates a TCI state corresponding to a component carrier (CC)/bandwidth part (BWP). For multi-downlink control information (M-DCI) based mTRP transmission, each control resource set (CORESET) is configured to be associated with one CORESETPoolIndex. Each DCI indicates one TCI state, which is used for PDSCH transmission at a CC/BWP corresponding to the TRP with the same CORESETPoolIndex value. For single DCI (S-DCI) based M-TRP transmission, each DCI indicates two TCI states, which are used for PDSCH transmission at corresponding CCs/BWPs corresponding two TRPs.

However, in the related art, for the multi-transmission reception point (mTRP) scenario, a DCI signaling indicates that one CC updates one TCI state. In case that a CC for a same TRP is updated, multiple DCI signalings are required, which results in large signaling overhead.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by those skilled in the art based on the embodiments of the present application without any creative work belong to the scope of the present application.

Methods for TCI state indication provided by embodiments of the present application may be applied to a carrier aggregation scenario for mTRP, and a method for updating multiple CC/BWP and multiple TRP beams using one DCI signaling is implemented by updating beams of some CCs in the CC list or by configuring multiple CC lists. By the method for TCI state indication provided by the embodiment of the present application, signaling overhead of the TCI state indication is reduced, and mTRP transmission is ensured.

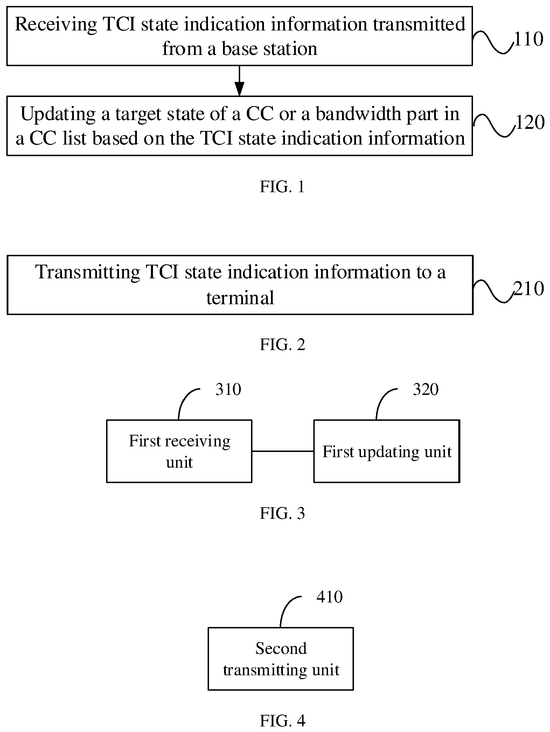

FIG. 1 is a first schematic flowchart of a method for transmission configuration indicator (TCI) state indication according to an embodiment of the present application. As shown in FIG. 1, the method for TCI state indication according to the embodiment of the present application includes the following steps.

Step 110: receiving TCI state indication information transmitted from a base station.

Specifically, a terminal may configure multiple candidate TCI states. Exemplarily, for a TCI state indication for PDCCH, a radio resource control (RRC) signaling assigns a subset of M configured candidate TCI states to each configured control resource set (CORESET). Through an MAC signaling, a network may dynamically indicate a specific TCI state to be valid from the M candidate state subsets corresponding to each CORESET. In case that the terminal monitors a PDCCH in a CORESET, the terminal will assume that the PDCCH will definitely use a beam used by a reference signal associated with the TCI state specified by the MAC, and the terminal may update a corresponding CC/BWP based on the TCI state. The TCI state indication information may be carried in the DCI.

Exemplarily, the TCI state indication information may indicate one TCI state, multiple TCI states, one TCI state group or multiple TCI state groups. Exemplarily, in case that the DCI where the TCI state indication information is located is S-DCI, one piece of S-DCI may indicate multiple TCI states, and each TCI state is associated with one TRP. The TCI state indication information (indicating multiple TCI state or TCI state groups) may further be carried in a M-DCI group, the M-DCI group may include multiple pieces of DCI, and one piece of DCI is associated with a TCI state of a CC/BWP corresponding to one TRP.

Step 120: updating a target state of a component carrier (CC) or a bandwidth part in a CC list based on the TCI state indication information.

The target state of the CC or the bandwidth part includes: a TCI state of a CC, a TCI state group of a CC, a TCI state of a bandwidth part, or a TCI state group of a bandwidth part. The target state may be expressed as a TCI state or a TCI state group for a CC/BWP.

The CC list is pre-configured by the base station for the terminal, and a quantity of the CC list is one or multiple, and the CC list may include a CC or a BWP. The CC list corresponds to multiple TCI state or TCI state groups, which may be understood that the CC in the CC list corresponds to multiple TCI state or multiple TCI state groups; or the bandwidth part in the CC list corresponds to multiple TCI state or multiple TCI state groups.

Specifically, for the BWP, it refers to a group of continuous common resource blocks (CRBs) corresponding to a specific parameter set on a specific carrier, which may be understood as a part of the bandwidth.

A component carrier or a bandwidth part is hereinafter abbreviated as CC/BWP. The CC list in the embodiment of the present application represents multiple bandwidths in a form of a list, and a bandwidth may include a CC or a BWP. Therefore, the CC list in the embodiment of the present application may also be used to represent BWP, which may be understood that the CC list in the embodiment of the present application also represents a BWP list. The embodiment of the present application may be used to update the TCI state of the CC, and may also be used to update the TCI state of the BWP. The CC or BWP is used alone in the following case for the convenience of example. For an embodiment using CC or BWP alone, it may be applied to bandwidth scenarios not mentioned (such as taking a CC as an example, it may be applied to BWP in the same way). Embodiments of the present application may be used to update a TCI state or a TCI state group. The TCI state or TCI state group is used alone in the following for the convenience of example. For an embodiment using the TCI state or TCI state group alone, it may be applied to scenarios not mentioned (such as taking the TCI state as an example, it may be applied to the TCI state group in the same way).

It should be understood that one TCI state corresponds to one TRP, and one TCI state group corresponds to an uplink TCI state and a downlink TCI state for one TRP.

The CC list corresponds to multiple TCI states or TCI state groups, which means that the CC list corresponds to multiple TRPs. For example, in case that there is one CC list, one CC list may correspond to multiple TCI states or TCI state groups, which may be understood that a CC/BWP in the CC list may correspond to multiple TRPs. In case that there are multiple CC lists, all CC lists correspond to multiple TCI states or TCI state groups, which may be understood that CCs/BWPs in all CC lists may correspond to multiple TRPs.

The terminal receives one or more CC lists configured by the base station in advance. It should be understood that in case of one CC list, a CC/BWP in one CC list may correspond to multiple TRPs. In case of multiple CC lists, one CC list may correspond to multiple TRPs, or one CC list may correspond to one TRP.

For example, taking the CC list containing a BWP as an example, in case that there is one CC list, the CC list includes BWP1 and BWP2, where BWP1 may correspond to TCI1 and TCI2, BWP2 corresponds to TCI1, and the CC list corresponds to multiple different TCIs. In case that there are two CC lists, CC list 1 includes BWP1-1 and BWP1-2, where BWP1-1 and BWP1-2 correspond to TCI1, and CC list 2 includes BWP2-1, where BWP2-1 corresponds to TCI2. In case that there are two CC lists, CC list 1 includes BWP1-1 and BWP1-2, where BWP1-1 and BWP1-2 correspond to TCI1 and TCI2, and CC list 2 includes BWP2-1, where BWP2-1 corresponds to TCI2. It should be understood that one TCI state corresponds to one TRP, and the CC list in the present embodiment generally (multiple CC lists are taken as a whole) corresponds to multiple TRPs.

Since both a CC and a BWP are used to represent a certain bandwidth frequency, and are usually written as CC/BWP in the protocol, the component carrier or the bandwidth part may be referred to as CC/BWP below.

In case that the terminal updates the target state in the CC list based on the TCI state indication information, as described above for the TCI and the CORESET, the TCI state indication information may be associated with the CORESET. That is, in case that the terminal monitors a certain CORESET, the terminal will assume that the TCI state indication information transmitted from the CORESET is associated with the TCI state associated with the CORESET, and the TCI state corresponds to one TRP, thereby updating a TCI state of the CC/BWP corresponding to the TRP corresponding to the TCI state associated with the CORESET based on the TCI state information.

Exemplarily, CORESET1 is associated with CC1 corresponding to TRP1, and CORESET2 is associated with CC2 corresponding to TRP2. In case that one piece of TCI state indication information is transmitted over CORESET1, the terminal may determine that the TCI state indication information is used to update TCI states of both CC1 corresponding to TRP1 and CC2 corresponding to TRP2.

It should be understood that the above is an example for the convenience of understanding the present application, and may also be implemented by related art other than the example, such as adding a TRP identifier, a CC/BWP identifier, etc. The embodiment of the present application does not limit how the TCI state indication information indicates multiple TRPs or multiple TCI states.

In an embodiment, the terminal pre-configures multiple CC lists, one CC list 1 corresponds to TRP1, and the CC list 1 includes CC1-1 (CC1 in the CC list 1, the same below will not be repeated), CC1-2 and CC1-3. One CC list 2 corresponds to TRP2, and the CC list 2 includes CC2-1 (CC1 in the CC list 2, the same below will not be repeated), CC2-2 and CC2-3. Exemplarily, the TCI state indication information 1 received by the terminal is associated with TRP1 and TRP2, and the terminal updates the CC list 1 and the CC list 2, that is, the terminal updates CCs corresponding to the two TRPs based on one piece of TCI state indication information 1. Exemplarily, the TCI state indication information 2 received by the terminal is associated with TRP1, and the terminal updates the TCI state corresponding to all CCs (CC1-1, CC1-2 and CC1-3) in the CC list 1.

It should be understood that one CC corresponding to multiple TRPs means that there may be multiple channels on one CC, and each channel may correspond to one TRP.

It should be understood that the above is an example for the convenience of understanding the present application and should not limit the present application.

In the method for TCI state indication provided by the embodiment of the present application, by pre-configuring one or more CC lists, where the CC lists correspond to different TCIs or TCI state groups, receiving TCI state indication information transmitted from the base station, and updating a state (a TCI state or a TCI state group) in the CC list based on the TCI state indication information, the CC/BWP corresponding to one or multiple TRPs is updated using one piece of TCI state indication information. By the method for TCI state indication provided by the embodiment of the present application, signaling overhead of the TCI state indication is reduced and mTRP transmission is ensured.

In an embodiment, the CC list includes any one or a combination of the following types:
a CC list configured for each transmission reception point (TRP) respectively;
a CC list configured based on a transmission reception point (TRP) transmission type corresponding to a CC or a bandwidth part; or
a CC list configured based on a downlink control information (DCI) mode.

Specifically, for the CC list configured for each TRP respectively, it may refer to configuring one CC list for each TRP. Exemplarily, a CC list 1 is configured for TRP1, and a CC list 2 is configured for a TRP. In case that TCI state indication information is associated with CC1, CC1 in the two CC lists may be updated through the TCI state indication information.

For the CC list configured based on the TRP transmission type corresponding to the CC or the bandwidth part, it may refer to configuring a CC list supporting multiple TRP transmission and a CC list not supporting multiple TRP transmission based on whether mTRP transmission is supported over CC/BWP.

Exemplarily, a CC list 1 and a CC list 2 are configured. The CC list 1 includes CC1-1 and CC1-2; and the CC list 2 includes CC2-1. CC2-1 supports mTRP transmission, and CC1-1 and CC1-2 do not support mTRP transmission. CC1-1 corresponds to TRP1, and CC1-2 corresponds to TRP2. CC2-1 may correspond to TRP1 and TRP2. In case that the TCI state indication information is associated with TRP1, a channel corresponding to TPR1 over CC1-1 in CC list 1 and CC2-1 in CC list 2 may be updated through the TCI state indication information.

For the CC list configured based on the DCI mode, it may refer to configuring a CC/BWP in a single-DCI (S-DCI) mode and a CC/BWP in a multi-DCI (M-DCI) mode for each CC list, or it may refer to configuring different CC lists for different DCI modes, and distinguishing a CC list in an S-DCI mode and a CC list in a M-DCI mode based on a DCI mode.

Specifically, a M-DCI mode refers to supporting M-DCI, and a S-DCI mode refers to supporting S-DCI.

Exemplarily, one CC list is configured, and one CC list may include CC1, CC2, and CC3. CC1 is a CC in a S-DCI mode, and CC2 and CC3 are in a M-DCI mode.

Exemplarily, a CC list 1 and a CC list 2 are configured. The CC list 1 includes CC1-1 and CC1-2; and the CC list 2 includes CC2-1. CC2-1 is in a M-DCI mode, and CC1-1 and CC1-2 are in an S-DCI mode.

It should be understood that the above CC lists may also be combined, such as a CC list configured for each TRP respectively, and the CCs in the CC list corresponding to each TRP may also be CCs in the S-DCI mode and CCs in the M-DCI mode. The combination of the CC lists configured based on a TRP transmission type corresponding to a CC or a bandwidth part and the CC lists configured based on the DCI mode will not be repeated here.

In the method for TCI state indication provided by the embodiment of the present application, multiple configuration types of CC lists are provided, and multiple CC lists are configured. After receiving the TCI state indication information transmitted from the base station, the terminal may update part of the CCs in one or more CC lists based on the TRP corresponding to the TCI state indication information, or the DCI signaling type of the DCI where the TCI state indication information is located, to update the CCs/BWPs corresponding to one or multiple TRPs using one piece of TCI state indication information. By the method for TCI state indication provided by the embodiment of the present application, signaling overhead of the TCI state indication is reduced and mTRP transmission is ensured.

In an embodiment, updating the target state of the CC or the bandwidth part in the CC list based on the TCI state indication information includes:
updating a target state of a CC or a bandwidth part corresponding to a transmission reception point (TRP) corresponding to the TCI state indication information based on the TCI state indication information.

It should be understood that updating the target state of the CC or the bandwidth part corresponding to the TRP corresponding to the TCI state indication information refers to CCs corresponding to the TRP configured in all CC lists, and all CC lists may be one CC list or multiple CC lists. In case that there is one CC list, different CCs in the CC list correspond to different TRPs. Based on the TRP corresponding to the TCI state indication information, the CC corresponding to the TRP in the CC list is updated instead of updating all CCs in the CC list, and the CC may be updated as needed, which may reduce the signaling overhead. In case that there are multiple CC lists, different TRPs may correspond to different CC lists, or different CCs in one CC list may correspond to different TRPs. An CC in the corresponding CC list may be selectively updated based on a TRP corresponding to the TCI state indication information. Alternatively, a CC corresponding to the TRP in the CC list may be selectively updated based on a TRP corresponding to the TCI state indication information, which may also reduce the signaling overhead.

In an embodiment, TCI state 3 and TCI state 6 are indicated in the TCI state indication information. TCI state 3 corresponds to TRP1, and TCI state 6 corresponds to TRP2. One CC list includes CC1, CC2, and CC3. CC1 corresponds to TRP1 and TRP2, CC2 corresponds to TRP1, and CC3 corresponds to TRP2. After receiving the TCI state indication information, the terminal updates TCI states of CC1 and CC2 corresponding to TRP1 to be TCI state 3, and updates TCI states of CC2 and CC3 corresponding to TRP2 to be TCI state 6 based on the TCI state indication information.

For cases where the TCI state indication information indicates one TCI state, a quantity of CC lists is multiple, and multiple CC list configuration modes exists or a combination of multiple cases, the method for updating the target state of the CC or the bandwidth part corresponding to the TRP corresponding to the TCI state indication information in the CC list shall refer to the above embodiment. It should be understood that the above is an example for the convenience of understanding the present application and should not limit the present application.

In an embodiment, in case that the CC list includes a CC list configured for each TRP, updating the target state of the CC or the bandwidth part in the CC list based on the TCI state indication information includes:
updating a target state of a CC or a bandwidth part in a CC list corresponding to a TRP corresponding to the TCI state indication information based on the TCI state indication information.

Specifically, in case of configuring a CC list for each TRP, the TCI state indication information may be used to update a TCI state of a CC in one of the lists.

In the two CC lists of the CC lists configured by each TRP, all CCs in CC list 1 are associated with TRP1; all CCs in CC list 2 are associated with TRP2, and CC2-1 is associated with TRP2. TCI state 3 and TCI state 6 are indicated in the TCI state indication information. TCI state 3 corresponds to TRP1, and TCI state 6 corresponds to TRP2. After receiving the TCI state indication information, the terminal updates the TCI state of a CC in CC list 1 corresponding to TRP1 to TCI state 3, and updates the TCI state of a CC in CC list 2 corresponding to TRP2 to TCI state 6 based on the TCI state indication information.

In the method for TCI state indication provided by the embodiment of the present application, the target state of all CCs/BWPs corresponding to the TRP may be updated through the TCI state indication information in case that the CC list includes CCs/BWPs corresponding to multiple TRPs. By the method for TCI state indication provided by the embodiment of the present application, signaling overhead of the TCI state indication is reduced.

In an embodiment, in case that the CC list includes a CC list configured based on the TRP transmission type corresponding to the CC or the bandwidth part, updating the target state of the CC or the bandwidth part in the CC list corresponding to the TRP corresponding to the TCI state indication information based on the TCI state indication information includes:
updating a target state of a CC or a bandwidth part in a CC list of a single-transmission reception point (sTRP) transmission corresponding to a TRP corresponding to the TCI state indication information based on the TCI state indication information; and
updating a target state of a CC or a bandwidth part in a CC list of a mTRP transmission and corresponding to a TRP corresponding to the TCI state indication information based on the TCI state indication information.

Exemplarily, among the three CC lists configured based on the TRP transmission type corresponding to the CC or the bandwidth part, CC list 1 is a CC list corresponding to TRP1 supporting sTRP transmission and includes CC1-1; CC list 2 is a CC list corresponding to TRP2 supporting sTRP transmission and includes CC2-1; and CC list 3 is a CC list supporting mTRP transmission and includes CC3-1.

In case that the TCI state indication information is two pieces of S-DCI, one piece of S-DCI indicates that TRP1 is updated to TCI state 5, then TCI states of CC1-1 and CC3-1 (corresponding to TRP1) are updated to 5. Another piece of S-DCI indicates that TRP2 is updated to TCI state 6, then TCI states of CC2-1 and CC3-1 (corresponding to TRP2) are updated to 6.

In the method for TCI state indication provided by the embodiment of the present application, by configuring the CC/BWP supporting different TRP transmission types in the CC list, a state of the CC/BWP is updated based on the DCI signaling, and TCI states (or state group) for the CC/BWP corresponding to multiple TRPs are updated using one piece of DCI. By the method for TCI state indication provided by the embodiment of the present application, signaling overhead of the TCI state indication is reduced, and mTRP transmission is ensured.

In an embodiment, the CC or the bandwidth part in the CC list includes:
a CC or a bandwidth part in a single-downlink control information (S-DCI) mode; and/or
a CC or a bandwidth part in a multi-downlink control information (M-DCI) mode; and
where updating the target state of the CC or the bandwidth part in the CC list based on the TCI state indication information includes:
   in case that DCI where the TCI state indication information is located is S-DCI, updating a target state of a first CC or bandwidth part corresponding to the S-DCI, where the first CC or bandwidth part is a CC or a bandwidth part in the S-DCI mode in the CC list; or
   in case that DCI where the TCI state indication information is located is M-DCI, updating a target state of a second CC or bandwidth part corresponding to the M-DCI, where the second CC or bandwidth part is a CC or a bandwidth part in the M-DCI mode in the CC list.

Specifically, for the CC or the bandwidth part in the S-DCI mode, it refers to a CC supporting the S-DCI mode or a CC or a bandwidth part supporting the S-DCI mode.

Specifically, for the CC or the bandwidth part in the M-DCI mode, it refers to a CC supporting the M-DCI mode or a CC/a bandwidth part supporting the M-DCI mode.

That is, the CC or the bandwidth part in the CC list includes any one or a combination of the following types:
a CC in an S-DCI mode;
a CC or a bandwidth part in an S-DCI mode;
a CC in an M-DCI mode; or
a CC or a bandwidth part in an M-DCI mode.

In a possible implementation, the terminal receives one CC list configured by the base station, and the CC list includes CC1, CC2 and CC3. CC1 supports S-DCI, and CC2 and CC3 support M-DCI. CC1 corresponds to TRP1 and TRP2, CC2 corresponds to TRP1, and CC3 corresponds to TRP2.

Exemplarily, in case that the TCI state indication information is M-DCI, M-DCI1 is associated with TRP1, M-DCI2 is associated with TRP2. After M-DCI1 is received, the TCI state of CC2 is updated. After M-DCI2 is received, the TCI state of CC3 is updated.

Exemplarily, in case that the TCI state indication information is S-DCI, the S-DCI indicates that a CC corresponding to TRP1 is updated to be TCI state 3, and a CC corresponding to TRP2 is updated to be TCI state 4. After receiving the S-DCI, the terminal updates the TCI state of CC1 corresponding to TRP1 to be TCI state 3, and the TCI state of CC1 corresponding to TRP2 to be TCI state 4.

In a possible implementation, S-DCI corresponds to all CCs/BWPs in the S-DCI mode, and M-DCI corresponds to all CCs/BWPs in the M-DCI mode. The terminal receives one CC list configured by the base station, and the CC list includes CC1, CC2 and CC3. CC1 supports S-DCI, and CC2 and CC3 support M-DCI. CC1 corresponds to TRP1 and TRP2, CC2 corresponds to TRP1, and CC3 corresponds to TRP2.

Exemplarily, in case that the TCI state indication information is M-DCI, all CCs: CC2 and CC3 in the M-DCI mode are updated.

Exemplarily, in case that the TCI state indication information is S-DCI, all CCs: CC1 in the S-DCI mode are updated.

It should be understood that the method for TCI state indication provided by the embodiment of the present application may be applied to multiple CC list configuration modes. For example, one CC list includes both a CC/BWP configured as a S-DCI mode and a CC/BWP configured as a M-DCI mode, or in multiple CC lists, all CCs/BWPs in one CC list are configured as the S-DCI mode, and all CCs/BWPs in one CC list are configured as the M-DCI mode.

Examples may be as follows:
one CC list is configured as an S-DCI mode and an M-DCI mode;
in multiple CC lists corresponding to different TRPs, each CC list includes a CC configured as an S-DCI mode and a CC configured as an M-DCI mode;
in multiple CC lists corresponding to different TRPs, each TRP corresponds to one list in an S-DCI mode and one list in an M-DCI mode respectively;
in multiple CC lists configured based on a TRP transmission type corresponding to a CC or a bandwidth part, each CC list includes a CC configured as an S-DCI mode and a CC configured as an M-DCI mode; and
in multiple CC lists configured based on a TRP transmission type corresponding to a CC or a bandwidth part, each CC list is split into one list in an S-DCI mode and one list in an M-DCI mode.

It should be understood that the above is an example for the convenience of understanding the present application and should not limit the present application.

In the method for TCI state indication provided by the embodiment of the present application, by configuring the CC/BWP in the S-DCI mode and the M-DCI mode in the CC list, a state of the CC/BWP are updated based on the DCI signaling, and TCI states of the CC/BWP corresponding to multiple TRPs are updated using one piece of DCI. By the method for TCI state indication provided by the embodiment of the present application, signaling overhead of the TCI state indication is reduced, and mTRP transmission is ensured.

In an embodiment, the method further includes:
determining a DCI signaling type of the DCI where the TCI state indication information is located based on a given first correspondence relationship and a resource set where the TCI state indication information is located; and/or
determining a transmission reception point (TRP) corresponding to the TCI state indication information based on a given second correspondence relationship and a resource set where the TCI state indication information is located,
where the first correspondence relationship is a correspondence relationship between the resource set and the DCI signaling type, and the second correspondence relationship is a correspondence relationship between the resource set and a TRP.

In the embodiment of the present application, the DCI signaling type and/or the corresponding TRP of the DCI where the TCI state indication information is located may be determined by the resource set where the DCI carrying the TCI state indication information is located, which may also be understood as the resource set used for transmission of the DCI.

The first correspondence relationship and the second correspondence relationship may be pre-configured by the base station for the terminal.

Exemplarily, the DCI pre-configured to be transmitted on CORESET1 is S-DCI. In case that the DCI signaling is transmitted on CORESET1, the terminal may determine that the DCI signaling currently transmitted on CORESET1 is the S-DCI. A DCI signaling not transmitted on CORESET1 is M-DCI. It should be understood that a resource set used for M-DCI transmission may also be preset, and a resource set used for an S-DCI transmission may not be preset; resource sets used for transmission may also be set for both the M-DCI and the S-DCI, which will not be repeated here.

Exemplarily, the TCI state indication information pre-configured to be transmitted on CORESET0 and CORESET1 is used to update a state of a CC corresponding to TRP0, and the TCI state indication information pre-configured to be transmitted on CORESET2 and CORESET3 is used to update a state of a CC corresponding to TRP1. Then, in case that the TCI state indication information is transmitted on CORESET1, the terminal may determine that the TCI state indication information currently transmitted on CORESET1 is used to update the state of the CC corresponding to TRP0.

Exemplarily, the base station indicates 2 TCI states for the terminal through a DCI signaling or a first MAC-CE signaling. The base station configures 5 CORESETs which are respectively represented as CORESET#0, CORESET#1, CORESET#2, CORESET#3, and CORESET#4 for the terminal through the RRC signaling. At the same time, the base station configures the second correspondence relationship between the TCI state and CORESET for the terminal. The second correspondence relationship may be configured through the MAC-CE signaling or the RRC signaling. One way is that the RRC signaling indicates, in the configuration of each CORESET, whether it uses a first TCI state or a second TCI state in the two TCI states, or uses two TCI states. It should be understood that each TCI state corresponds to one TRP. For example, for CORESET#2, the base station is configured to indicate two TCI states, one TCI state is used for updating the state of the CC corresponding to TRP0 to be TCI state 3, and the other TCI state is used for updating a state of a CC corresponding to TRP2 to be TCI state 6. In case that the DCI signaling is transmitted on CORESET#2, the terminal may update the state of the CC corresponding to TRP1 and the state of the CC corresponding to TRP2 based on the DCI signaling.

In the method for TCI state indication provided by the embodiment of the present application, by associating the resource set with the DCI signaling and the TCI state indication information, the terminal may determine one or more TCI states through one piece of TCI state indication information, and the terminal may determine a signaling type of the current DCI signaling, the CC/BWP corresponding to multiple TRPs may be updated using one piece of DCI. By the method for TCI state indication provided by the embodiment of the present application, signaling overhead of the TCI state indication is reduced, and mTRP transmission is ensured.

In an embodiment, the TCI state indication information is used to indicate a TCI state or a TCI state group.

Specifically, the terminal receives the TCI state indication information transmitted from the base station, and the TCI state indication information may be used to indicate the TCI state.

In case that the TCI state indication information is used to indicate the TCI state, the TCI state indication information may be used to update the TCI state of the CC/BWP corresponding to the corresponding TRP in the corresponding CC list. It should be understood that, at this time, both an uplink beam and a downlink beam for one TRP adopt the indicated TCI state, that is, the uplink beam and the downlink beam for the TRP adopt the same indicated TCI state. The embodiment of the present application may be applied to a joint TCI mode, that is, one TRP uses the same uplink and downlink beams for transmission and reception.

In an embodiment, the TCI state indication information includes TCI single state indication information or TCI state group indication information,
where the TCI single state indication information is used to indicate one TCI state; and
the TCI state group indication information includes: uplink TCI state indication information and downlink TCI state indication information.

The terminal receives the TCI state indication information transmitted from the base station, and the TCI state indication information may be used to indicate one TCI state group or multiple TCI state groups. One TCI state group may include an uplink TCI state and a downlink TCI state, the uplink TCI state indication information is used to update an uplink TCI state, and the downlink TCI state indication information is used to update a downlink TCI state. The embodiment of the present application may be applied to a separate TCI mode, and an uplink beam used by each TRP is different from a downlink beam used by each TRP.

The method for TCI state indication provided by the embodiment of the present application may be combined with the method for TCI state indication provided by the above embodiments, which will not be repeated here.

In the method for TCI state indication provided by the embodiment of the present application, the TCI state indication information may indicate the TCI state or the TCI state group, and the indication mode of the TCI state indication information provided by the embodiment of the present application may be combined with the above embodiments. Therefore, by the method for TCI state indication provided by the embodiment of the present application, the TCI state indication signaling overhead is reduced, mTRP transmission is ensured, and the flexibility of the TCI state indication is improved.

FIG. 2 is a second schematic flowchart of a method for transmission configuration indicator (TCI) state indication according to an embodiment of the present application. As shown in FIG. 2, the method for TCI state indication according to the embodiment of the present application, performed by a base station, includes the following steps.

Step 210: transmitting TCI state indication information to a terminal, where the TCI state indication information is used to indicate the terminal to update a target state of a component carrier (CC) or a bandwidth part in a CC list.

The CC list is pre-configured by the base station for the terminal, the CC list corresponds to multiple TCI states or multiple TCI state groups, and the target state of the CC or the bandwidth part includes: a TCI state of a CC, a TCI state group of a CC, a TCI state of a bandwidth part, or a TCI state group of a bandwidth part.

Specifically, the CC list is pre-configured by the base station for the terminal, and a quantity of the CC list is one or multiple, and the CC list may include a CC or a BWP. The CC list corresponds to multiple TCI state or TCI state groups, which may be understood that the CC in the CC list corresponds to multiple TCI state or multiple TCI state groups; or the bandwidth part in the CC list corresponds to multiple TCI state or multiple TCI state groups. The embodiment of the present application does not limit how the base station configures the CC list.

Introductions of the TCI state, the TCI state indication information, the CC, the BWP, the correspondence relationship between the TCI state and the TRP, etc. involved in the embodiment of the present application may be referred to the above introduction, and will not be repeated here.

In the method for TCI state indication provided by the embodiment of the present application, multiple configuration types of CC lists are provided, and multiple CC lists are configured. After receiving the TCI state indication information transmitted from the base station, the terminal may update multiple CC lists based on the TCI state indication information, and a CC/BWP corresponding to one or multiple TRPs is updated using one piece of TCI state indication information. By the method for TCI state indication provided by the embodiment of the present application, signaling overhead of the TCI state indication is reduced, and mTRP transmission is ensured.

In an embodiment, the CC list includes any one or a combination of the following types:
a CC list configured for each transmission reception point (TRP) respectively;
a CC list configured based on a transmission reception point (TRP) transmission type corresponding to a CC or a bandwidth part; or
a CC list configured based on a downlink control information (DCI) mode.

The type of the CC list configured on the base station side may be referred to the above introduction, and will not be repeated here.

In an embodiment, the TCI state indication information is used to update a target state of a CC or a bandwidth part corresponding to a transmission reception point (TRP) corresponding to the TCI state indication information based on the TCI state indication information.

Introduction of updating the target state of the TRP corresponding to the TCI state indication information may be referred to the above introduction and will not be repeated here.

In an embodiment, the CC or the bandwidth part in the CC list includes:
a CC or a bandwidth part in a single-downlink control information (S-DCI) mode; and/or
a CC or a bandwidth part in a multi-downlink control information (M-DCI) mode; and
where in case that DCI where the TCI state indication information is located is S-DCI, the TCI state indication information is used to update a target state of a first CC or bandwidth part corresponding to the S-DCI, where the first CC or bandwidth part is a CC or a bandwidth part in the S-DCI mode in the CC list; or
in case that DCI where the TCI state indication information is located is M-DCI, the TCI state indication information is used to update a target state of a second CC or bandwidth part corresponding to the M-DCI, where the second CC or bandwidth part is a CC or a bandwidth part in the M-DCI mode in the CC list.

Introduction of updating a state of CC/BWP corresponding to the DCI mode based on the DCI signaling type of the DCI where the TCI state indication information is located may be referred to the above introduction and will not be repeated here.

In an embodiment, the method further includes:
configuring a first correspondence relationship and/or a second correspondence relationship for the terminal,
where the first correspondence relationship is a correspondence relationship between a resource set and a DCI signaling type, and is used to determine a DCI signaling type of the DCI where the TCI state indication information is located; and the second correspondence relationship is a correspondence relationship between the resource set and a TRP, and is used to determine a transmission reception point (TRP) corresponding to the TCI state indication information.

Specifically, the base station may configure the first correspondence relationship and/or the second correspondence relationship for the terminal through an RRC message or a MAC-CE signaling and other signaling. The embodiment of the present application does not limit how the base station configures the first correspondence relationship and/or the second correspondence relationship for the terminal.

Exemplarily, the base station may pre-configure DCI transmitted on CORESET1 for the terminal to be S-DCI. In case that the DCI signaling is transmitted on CORESET1, the terminal may determine that the DCI signaling currently transmitted on CORESET1 is the S-DCI. A DCI signaling not transmitted on CORESET1 is M-DCI. It should be understood that the resource set used for M-DCI transmission may also be preset, and the resource set used for an S-DCI transmission may not be preset; resource sets used for transmission may also be set for both the M-DCI and the S-DCI, which will not be repeated here.

Exemplarily, the base station may pre-configure TCI state indication information transmitted on CORESET0 and CORESET1 for the terminal for updating the state of the CC corresponding to TRP0, and the TCI state indication information pre-configured to be transmitted on CORESET2 and CORESET3 is used to update a state of a CC corresponding to TRP1. Then, in case that the TCI state indication information is transmitted on CORESET1, the terminal may determine that the TCI state indication information currently transmitted on CORESET1 is used to update the state of the CC corresponding to TRP0.

In an embodiment, the base station indicates 2 TCI states for the terminal through a DCI signaling or a first MAC-CE signaling. The base station configures 5 CORESETs which are respectively represented as CORESET#0, CORESET#1, CORESET#2, CORESET#3, and CORESET#4 for the terminal through the RRC signaling. At the same time, the base station configures the second correspondence relationship between the TCI state and CORESET for the terminal. The second correspondence relationship may be configured through the MAC-CE signaling or the RRC signaling. The second correspondence relationship may be configured in the following multiple ways.

Exemplarily, the RRC signaling indicates, in the configuration of each CORESET, whether it uses a first TCI state or a second TCI state in the two TCI states, or uses two TCI states. It should be understood that each TCI state corresponds to one TRP. For example, for CORESET#2, the base station is configured to indicate two TCI states, one TCI state is used for updating the state of the CC corresponding to TRP0 to be TCI state 3, and the other TCI state is used for updating a state of a CC corresponding to TRP2 to be TCI state 6. In case that DCI signaling is transmitted on CORESET#2, the terminal may update the state of the CC corresponding to TRP1 and the state of the CC corresponding to TRP2 based on the DCI signaling.

Exemplarily, the base station configures CORESET groups through the RRC signaling, and the base station configures the second correspondence relationship between the TCI state and the CORESET group for the terminal. Group 1 includes {CORESET#0, CORESET#1, CORESET#2}, and group 2 includes {CORESET#3, CORESET#4}. The first TCI state and the second TCI state are configured in group 1, and the second TCI state is configured in group 2. In addition, it may also be agreed through the protocol that the CORESET in group 1 uses two TCI states, and the first TCI state is used in group 2. At this time, it is not necessary to configure the TCI state used in the group. A CORESET ID in the CORESET group may be updated through the MAC-CE signaling.

Exemplarily, the RRC signaling configures to indicate a CORESET set corresponding to the first TCI state and a CORESET set corresponding to the second TCI state. For example, the RRC signaling configures that the first TCI state is associated with {CORESET#0, CORESET#1}, and the second TCI state is associated with {CORESET#2, CORESET#3, CORESET#4}. It may also be that the RRC signaling configures that the first TCI state is associated with {CORESET#0, CORESET#1, CORESET#3}, and the second TCI state is associated with {CORESET#2, CORESET#3, CORESET#4}.

Exemplarily, the MAC-CE signaling is used to indicate the second correspondence relationship. For example, a CORESET set or a CORESET group associated with each TCI state is added to an MAC-CE signaling for activating the TCI state.

It should be understood that the above is an example for the convenience of understanding the present application and should not limit the present application.

In an embodiment, the TCI state indication information includes TCI single state indication information or TCI state group indication information,
where the TCI single state indication information is used to indicate one TCI state; and
the TCI state group indication information includes: uplink TCI state indication information and downlink TCI state indication information.

Introduction of TCI single state indication information and TCI state group indication information may be referred to the above introduction and will not be repeated here.

In the method for TCI state indication provided by the embodiment of the present application, the TCI state indication information may indicate the TCI state or TCI state group, and the indication mode of the TCI state indication information provided by the embodiment of the present application may be combined with the above embodiments. Therefore, by the method for TCI state indication provided by the embodiment of the present application, the TCI state indication signaling overhead is reduced, mTRP transmission is ensured, and the flexibility of the TCI state indication is improved.

Methods for TCI state indication provided by the embodiments of the present application are introduced below in combination with multiple embodiments.

In the following embodiments, updating a TCI state corresponding to a TRP refers to updating a TCI state of a CC/BWP corresponding to the TRP.

Embodiment 1: a base station configures one CC list for a terminal, which includes N CCs, where N is a positive integer. In the present embodiment, the CC list is one CC list configured based on a DCI mode, and different CCs in the CC list correspond to different DCI modes.

Table 1 is a first CC list provided by the embodiment of the present application, as shown in Table 1.

**Table 1 First CC list**

| |
|---|
| CC0 |
| CC_1 |
| CC_2 |
| ... |
| CC_N-1 |

CC_0 and CC_1 are configured as an M-DCI mode, and the remaining CCs are configured as an S-DCI mode. That is, CORESETs on CC_0 and CC_1 are configured with CORESETPoolIndex, which indicates that the TCI state indication information carried in the M-DCI is used on CC_0 and CC_1 for TCI state indication, which may be applied to an mTRP transmission. The remaining CCs are not configured with CORESETPoolIndex, which indicates that the TCI state indication information carried in the S-DCI is used in the remaining CCs for TCI state indication.

In case that TCI state indication information carried in the S-DCI is used for TCI state indication, only a TCI state of the CC/BWP configured as the S-DCI mode is updated.

For example, if the TCI state indication information carried in the S-DCI indicates TCI state TCI_5, then all of CC_2, ..., CC_N-1 are updated to TCI_5 except CC_0 and CC_1, and this is an sTRP transmission. If the S-DCI indicates two TCI states (TCI_6, TCI_8), all of CC_2, ..., CC_N-1 are updated to TCI_6 and TCI_8 except CC_0 and CC_1. Channels of different TRPs corresponding to each CC are transmitted using TCI_6 and TCI_8 respectively, and this is the mTRP transmission. This way may realize simultaneous sTRP/mTRP switching for a same CC.

It should be understood that sTRP/mTRP switching includes switching from an STRP to an mTRP and switching from an mTRP to an STRP.

Switching from the STRP to the mTRP means that the most recent TRP transmission is an STRP transmission and the current TRP transmission is an mTRP transmission. Exemplarily, a TCI state of the CC corresponding to TRP0 is updated for the first time, and a state of CCs corresponding to TRP0 and TRP1 is updated for the second time.

Switching from the mTRP to the STRP means that the most recent TRP transmission is an mTRP transmission and the current TRP transmission is an STRP transmission. Exemplarily, a TCI state of CCs corresponding to TRP0 and TRP1 is updated for the first time, and a state of the CC corresponding to TRP0 is updated for the second time.

If the TCI state indication information carried in the M-DCI indicates a TCI state, only the TCI state of the CC/BWP configured as the M-DCI mode is updated. A TCI state of the TRP corresponding to a value of CORESETPoolIndex corresponding to these CCs/BWPs is updated based on the value of CORESETPoolIndex.

For example, in case that DCI transmitted on the CORESET associated with CORESETPoolIndex0 indicates TCI_7, the DCI is used to update TCI states of channels associated with CORESETPoolIndex0 on CC_0 and CC_1. For example, on CC_0, CORESET0 and CORESET1 are configured to be associated with CORESETPoolIndex0; and on CC_1, CORESET0, CORESET1 and CORESET2 are configured to be associated with CORESETPoolIndex0. In this way, CORESET0 and CORESET1 on CC_0 are updated to TCI_7, and similarly, CORESET0, CORESET1 and CORESET2 on CC_1 are updated to TCL_7.

In this way, the terminal may distinguish different CCs in the list by whether the base station configures CORESETPoolIndex, and only TCI states of some CCs in the list corresponding to the DCI signaling type of the DCI where the TCI state indication information is located is required to be updated each time.

It should be understood that the terminal may distinguish different CCs in the list by whether the base station configures CORESETPoolIndex, which means that the terminal may distinguish whether the CC in the list is in an S-DCI mode or in an M-DCI mode by whether the base station configures CORESETPoolIndex, and update the CC corresponding to the mode based on the DCI signaling type.

Embodiment 2: a base station configures a TRP-specific CC list for a terminal, that is, configures one CC list for each TRP. In the present embodiment, the CC list is a CC list configured for each TRP. In the multiple CC lists of the present embodiment, each CC list corresponds to different TRPs.

Table 2 is a second CC list according to an embodiment of the present application, and Table 3 is a third CC list according to an embodiment of the present application. The base station configures two CC lists in Table 2 and Table 3 for the terminal.

**Table 2 Second CC list**

| |
|---|
| CC_0 |
| CC_1 |
| CC_2 |
| ... |
| CC_N-1 |

**Table 3 Third CC list**

| |
|---|
| CC_0 |
| CC_3 |
| ... |
| CC_N-1 |
| CC_N |

Each CC list corresponds to one TRP, and each CC list may include different CCs. Each CC list may include different CCs, which may mean that each CC list may include different quantities of CCs. Each CC list may include different CCs, which may also mean that each CC list may include different specific CCs in case that the quantities of CCs are the same. For example, Table 2 corresponds to TRP0 and includes N CCs. Table 3 corresponds to TRP1 and includes N-1 CCs (excluding CC_1 and CC_2, and including CC_N). It is assumed that CC_0 and CC_N-1 are configured with CORESETPoolIndex, which means that CC_0 and CC_N-1 are configured as an M-DCI mode and may be applied to a mTRP transmission, and the remaining CCs are configured as an S-DCI mode.

If the TCI state indication information carried in the S-DCI is used for TCI state indication, a TCI state of the CC/BWP configured as the S-DCI mode in each CC list is updated accordingly in case that the TCI state indication information indicates TCI state for two TRPs. For example, the S-DCI indicates two TCI states, which are represented as TCI_5 and TCI_8. TCI states of all CCs except CC_0 and CC_N-1 configured as the mTRP mode corresponding to the TRP0 in Table 2 are updated to TCI_5. Similarly, TCI states of all CCs except CC_0 and CC_N-1 configured as the mTRP mode corresponding to the TRP1 in Table 3 are updated to TCI_8.

If the TCI state indication information carried in the S-DCI is used for TCI state indication, in case that a TCI state for one TRP is indicated, if the TCI state indication information indicates to update a TCI state for one of the TRPs, TCI states of CCs in the CC list corresponding to the TRP are updated, and TCI states of CCs in another list are maintained. For example, the TCI state indication information carried in the S-DCI indicates that TCI_6 is used to update the TCI state for TRP1. In Table 3, TCI states of all CCs except CC_0 and CC_N-1 configured as the mTRP mode corresponding to TRP1 are updated to TCI_6, while the TCI state of CCs in Table 2 corresponding to TRP0 remains unchanged.

In case that the TCI state indication information carried in the S-DCI indicates switching from mTRP to sTRP, TCI states in the corresponding CC list are updated, TCI states in another CC list with the same CC index are invalid, and TCI states of the remaining CCs remain unchanged. Simultaneous sTRP/mTRP switching for multiple CCs/BWPs is realized. For example, the S-DCI indicates that TCI_10 represents that mTRP is switched to sTRP, and is then switched to TRP0. In this way, TCI states for TRP0 in all CCs except CC_0 and CC_N-1 configured as the M-DCI mode in Table 2 are updated to TCI_10. While TCI states for TRP1 in all CCs except CC_0, CC_N-1 and CC_N configured as the M-DCI mode in Table 3 are invalid. States for TRP1 on CC_0, CC_N-1 and CC_N remain unchanged.

If the TCI state indication information carried in the M-DCI is used to indicate the TCI state, only TCI states in the CC list configured as the M-DCI in the CC list corresponding to the corresponding CORESETPoolIndex are updated. For example, in case that DCI transmitted on the CORESET associated with CORESETPoolIndex0 indicates TCI_7, TCI states for TRP0 in the CC configured as the M-DCI mode in Table 2 are updated. That is, TCI states on CC_0 and CC_N-1 are updated to TCI_7. In case that DCI transmitted on the CORESET associated with CORESETPoolIndex0 indicates TCI_7, TCI states for TRP0 in the CC configured in the M-DCI mode in Table 2 are updated. That is, TCI states on CC_0 and CC_N-1 in Table 2 are updated to TCI_7. In case that DCI transmitted on the CORESET associated with CORESETPoolIndex1 indicates TCI_3, TCI states for TRP1 in the CC configured in the M-DCI mode in Table 3 are updated. That is, TCI states on CC_0 and CC_N-1 in Table 3 are updated to TCI_3. It should be understood that TRP0 is associated with CORESETPoolIndex0, and TRP1 is associated with CORESETPoolIndex1. The DCI signaling type of M-DCI type is associated with CORESETPoolIndex0 and CORESETPoolIndex1.

It should be understood that the TCI state indication information indicates switching from mTRP to sTRP, which means that the most recent TCI state indication information indicates multiple TCI states while the current TCI state indication information indicates one TCI state. The TCI state indication information indicates switching from sTRP to mTRP, which means that the most recent TCI state indication information indicates one TCI state while the current TCI state indication information indicates multiple TCI states.

Embodiment 3: different CCs are divided into three CC lists based on whether the mTRP transmission is supported. In the present embodiment, the CC lists are CC lists configured based on the TRP transmission type corresponding to the CC or the bandwidth part. Among the multiple CC lists of the present embodiment, some CC lists correspond to CCs/BWPs supporting the mTRP transmission, and some CC lists correspond to CCs/BWPs only supporting the sTRP transmission.

Table 4 is a fourth CC list according to an embodiment of the present application, Table 5 is a fifth CC list according to an embodiment of the present application, and Table 6 is a sixth CC list according to an embodiment of the present application. A base station configures three CC lists in Tables 4, 5 and 6 for a terminal, as described in Tables 4, 5 and 6.

**Table 4 Fourth CC list**

| |
|---|
| CC_0 |
| CC_1 |
| CC_2 |
| ... |
| CC_M-1 |

**Table 5 Fifth CC list**

| |
|---|
| CC_M |
| CC_M+1 |
| CC_M+2 |
| ... |
| CC_K-1 |

**Table 6 Sixth CC list**

| |
|---|
| CC_K |
| CC_K+1 |
| CC_K+2 |
| ... |
| CC_N-1 |

Table 4 indicates CCs that may only support the sTRP transmission and correspond to TRP0. Table 5 indicates CCs that may support the mTRP transmission. Table 6 indicates CCs that may only support the sTRP transmission and correspond to TRP1. CCs in each list are different. For some CCs in Table 5, the base station may configure CORESETPoolIndex for these CCs, which indicates that these CCs are configured as an M-DCI mode. That is, for these CCs, TCI state indication information carried in the M-DCI is used for TCI state indication, which may be applied to the mTRP transmission. It is assumed below that none of the CCs in Table 5 is configured with CORESETPoolIndex, and all CCs in Table 5 are configured as an S-DCI mode.

If the TCI state indication information carried in the S-DCI is used for TCI state indication, in case that the TCI state indication information indicates TCI states for two TRPs, all TCI states for the TRP in CCs of the above three CC lists are updated. For example, the TCI state indication information carried in the S-DCI indicates two TCI states, which are represented as TCI_5 and TCI_8, whereTCI_5 corresponds to TRP0, and TCI_8 corresponds to TRP1. At this time, TCI states for TRP0 in all CCs in Table 4 and Table 5 are updated to TCI_5. Similarly, TCI states for TRP1 in all CCs in Table 5 and Table 6 are updated to TCI_8.

If the TCI state indication information carried in the S-DCI is used for TCI state indication and the TCI state indication information indicates a TCI state for one TRP, if the TCI state indication information indicates to update a TCI state for one of the TRPs, CCs in two CC list corresponding to the TRP are updated, and TCI states of CCs in another list are maintained. For example, the TCI state indication information carried in the S-DCI indicates that TCI_6 is used to update the TCI state for TRP1, TCI states for TRP1 in all CCs in Table 5 and Table 6 are updated to TCI_6, while TCI states for TRP0 in the CCs in Table 4 remain unchanged and TCI states for TRP0 in the CCs in Table 5 remain unchanged.

In case that a TCI state indicated by the TCI state indication information carried in the S-DCI indicates switching from mTRP to sTRP, TCI states in the corresponding CC list are updated, and TCI states for the CCs in the remaining lists remain unchanged. Simultaneous sTRP/mTRP switching for multiple CCs/BWPs is realized. For example, the S-DCI indicates that TCI_10 represents that mTRP is switched to sTRP, and is then switched to TRP0. In this way, TCI states for TRP0 in all CCs in Table 4 and Table 5 are updated to TCI_10. TCI states for TRP1 in all CCs in Table 5 are invalid. TCI states for TRP1 in all CCs in Table 6 remain unchanged.

Embodiment 4: for the above embodiments 1-3, it is also possible to not distinguish between mTRPs in the S-DCI mode and the M-DCI mode in case that the TCI state is updated. A TCI state for a TRP in a CC in the corresponding list may be updated using the TCI state indicated by the TCI state indication information carried in the S-DCI, or a TCI state for a TRP in a CC in the corresponding list may be updated using the TCI state indicated by the TCI state indication information carried in the M-DCI.

Taking Embodiment 1 as an example, a base station configures one CC list for a terminal, which includes N CCs. As shown in Table 1.

CORESETs on CC_0 and CC_1 are configured with CORESETPoolIndex, which indicates that CC_0 and CC_1 are configured as an M-DCI mode and may be applied to the mTRP transmission. Remaining CCs are not configured with CORESETPoolIndex, which indicates that these CCs are configured as an S-DCI mode.

In case that TCI state indication information carried in the S-DCI is used for TCI state indication, only TCI states of all CCs/BWPs c are updated. For example, the S-DCI indicates one TCI state, which is TCI_5, and is the sTRP transmission. TRP0 is used, and all of CC_2, ..., CC_N-1 are updated to TCI_5. TCI states for the TRP corresponding to CORESETPoolIndex0 on CC_0 and CC_1 are updated to TCI_5, and TCI states for the TRPs corresponding to CORESETPoolIndex1 remain unchanged. If the S-DCI indicates two TCI states (TCI_6, TCI_8), then all of CC_2, ..., CC_N-1 are updated to TCI_6 and TCI_8. Channels of different TRPs corresponding to each CC are transmitted using TCI_6 and TCI_8 respectively, and this is the mTRP transmission. TCI states for the TRP corresponding to CORESETPoolIndex0 on CC_0 and CC_1 are updated to TCI_6, and TCI states for the TRPs corresponding to CORESETPoolIndex1 are updated to TCI_8.

If the TCI state indication information carried in the M-DCI indicates the TCI state, it may only indicate one TCI state, and may update a TCI state for one TRP, but cannot realize the dynamic switching of sTRP/mTRP. For example, in case that the DCI transmitted on the CORESET associated with CORESETPoolIndex0 indicates TCI_7, the DCI is used to update TCI states for a TRP corresponding to CORESETPoolIndex0 on CC_0 and CC_1. For CC_2, ..., CC_N-1, a TCI state for TRP0 is updated to TCI_7. It should be understood that for TRP1, another DCI needs to be used for indication, which is the same as the update method for TRP0, and will not be repeated here.

Other embodiments are similar to this and will not be repeated.

### Embodiment 5:

TCI state indication is performed based on TCI state indication information supporting the S-DCI or TCI state indication information supporting the M-DCI. That is, it is configured as an S-DCI mode or an M-DCI mode. In Embodiment 1 to Embodiment 4, the CC list may be further divided, and the CC list in the S-DCI mode and the CC list in the M-DCI mode are configured respectively. The remaining indication methods are the same as above and will not be repeated.

### Embodiment 6:

As described in Embodiment 1to Embodiment 5, TCI state indication information indicated by a base station to a terminal may indicate one TCI state for updating a TCI state for a corresponding TRP in a corresponding CC list. This scenario corresponds to a joint TCI mode, that is, each TRP uses the same uplink and downlink beams for transmission and reception.

Another scenario is a separate TCI mode, and an uplink beam used by each TRP is different from a downlink beam used by each TRP. In this case, the base station needs to indicate one TCI state group to the terminal, which includes TCI states for uplink and TCI states for downlink. In the embodiment of the present application, the TCI state indication information indicated by the base station to the terminal may be used to update one TCI state group, that is, be used to update one TCI state group for a corresponding TRP in a corresponding CC list. The remaining methods are the same and will not be repeated.

Apparatuses for transmission configuration indicator (TCI) state indication provided by the embodiments of the present application are introduced below in combination with multiple embodiments.

FIG. 3 is a first schematic structural diagram of an apparatus for transmission configuration indicator (TCI) state indication according to an embodiment of the present application. As shown in FIG. 3, the apparatus for TCI state indication according to the embodiment of the present application, for use in a terminal, includes:
a first receiving unit 310, used for receiving TCI state indication information transmitted from a base station; and
a first updating unit 320, used for updating a target state of a component carrier (CC) or a bandwidth part in a CC list based on the TCI state indication information,
where the CC list is pre-configured by the base station for the terminal, the CC list corresponds to multiple TCI states or multiple TCI state groups, a quantity of the CC list is one or multiple, and the target state of the CC or the bandwidth part includes: a TCI state of a CC, a TCI state group of a CC, a TCI state of a bandwidth part, or a TCI state group of a bandwidth part.

In the apparatus for TCI state indication provided by the embodiment of the present application, by pre-configuring one or more CC lists, receiving TCI state indication information transmitted from the base station, and updating a state (a TCI state or a TCI state group) in the CC list based on the TCI state indication information, the CC/BWP corresponding to multiple TRPs is updated using one piece of TCI state indication information. By the apparatus for TCI state indication provided by the embodiment of the present application, signaling overhead of the TCI state indication is reduced, and mTRP transmission is ensured.

In an embodiment, the CC list includes any one or a combination of the following types:
a CC list configured for each transmission reception point (TRP) respectively;
a CC list configured based on a transmission reception point (TRP) transmission type corresponding to a CC or a bandwidth part; or
a CC list configured based on a downlink control information (DCI) mode.

In an embodiment, updating the target state of the CC or the bandwidth part in the CC list based on the TCI state indication information includes:
updating a target state of a CC or a bandwidth part corresponding to a transmission reception point (TRP) corresponding to the TCI state indication information based on the TCI state indication information.

In an embodiment, the CC or the bandwidth part in the CC list includes:
a CC or a bandwidth part in a single-downlink control information (S-DCI) mode; and/or
a CC or a bandwidth part in a multi-downlink control information (M-DCI) mode; and
where updating the target state of the CC or the bandwidth part in the CC list based on the TCI state indication information includes:
   in case that DCI where the TCI state indication information is located is S-DCI, updating a target state of a first CC or bandwidth part corresponding to the S-DCI, where the first CC or bandwidth part is a CC or a bandwidth part in the S-DCI mode in the CC list; or
   in case that DCI where the TCI state indication information is located is M-DCI, updating a target state of a second CC or bandwidth part corresponding to the M-DCI, where the second CC or bandwidth part is a CC or a bandwidth part in the M-DCI mode in the CC list.

In an embodiment, the apparatus further includes a first determining unit, where the first determining unit is used for:
determining a DCI signaling type of the DCI where the TCI state indication information is located based on a given first correspondence relationship and a resource set where the TCI state indication information is located; and/or
determining a transmission reception point (TRP) corresponding to the TCI state indication information based on a given second correspondence relationship and a resource set where the TCI state indication information is located,
where the first correspondence relationship is a correspondence relationship between the resource set and the DCI signaling type, and the second correspondence relationship is a correspondence relationship between the resource set and a TRP.

In an embodiment, the TCI state indication information is used to indicate a TCI state or a TCI state group.

The method and apparatus provided by various embodiments of the present application are based on the same application concept. Since the principles of solving problems by the method and apparatus are similar, the above-mentioned apparatus for TCI state indication provided by the embodiments of the present application may implement all the method steps implemented by the above-mentioned method for TCI state indication embodiment performed by the terminal, and may achieve the same effect. Therefore, the implementation of the method and apparatus may refer to each other, and the repeated parts will not be repeated.

FIG. 4 is a second schematic structural diagram of an apparatus for transmission configuration indicator (TCI) state indication according to an embodiment of the present application. The apparatus for TCI state indication according to the embodiment of the present application, for use in a base station, includes:
a second transmitting unit 410, used for transmitting TCI state indication information to a terminal, where the TCI state indication information is used to indicate the terminal to update a target state of a component carrier (CC) or a bandwidth part in a CC list,
where the CC list is pre-configured by the base station for the terminal, the CC list corresponds to multiple TCI states or multiple TCI state groups, and the target state of the CC or the bandwidth part includes: a TCI state of a CC, a TCI state group of a CC, a TCI state of a bandwidth part, or a TCI state group of a bandwidth part.

In the apparatus for TCI state indication provided by the embodiment of the present application, by pre-configuring one or more CC lists, receiving TCI state indication information transmitted from the base station, and updating a state (a TCI state or a TCI state group) in the CC list based on the TCI state indication information, the CC/BWP corresponding to multiple TRPs is updated using one piece of TCI state indication information. By the apparatus for TCI state indication provided by the embodiment of the present application, signaling overhead of the TCI state indication is reduced, and mTRP transmission is ensured.

In an embodiment, the CC list includes any one or a combination of the following types:
a CC list configured for each transmission reception point (TRP) respectively;
a CC list configured based on a transmission reception point (TRP) transmission type corresponding to a CC or a bandwidth part; or
a CC list configured based on a downlink control information (DCI) mode.

In an embodiment, the TCI state indication information is used to update a target state of a CC or a bandwidth part corresponding to a transmission reception point (TRP) corresponding to the TCI state indication information based on the TCI state indication information.

In an embodiment, the CC or the bandwidth part in the CC list includes:
a CC or a bandwidth part in a single-downlink control information (S-DCI) mode; and/or
a CC or a bandwidth part in a multi-downlink control information (M-DCI) mode; and
where in case that DCI where the TCI state indication information is located is S-DCI, the TCI state indication information is used to update a target state of a first CC or bandwidth part corresponding to the S-DCI, where the first CC or bandwidth part is a CC or a bandwidth part in the S-DCI mode in the CC list; or
in case that DCI where the TCI state indication information is located is M-DCI, the TCI state indication information is used to update a target state of a second CC or bandwidth part corresponding to the M-DCI, where the second CC or bandwidth part is a CC or a bandwidth part in the M-DCI mode in the CC list.

In an embodiment, the apparatus further includes a third transmitting unit, where the third transmitting unit is used for configuring a first correspondence relationship and/or a second correspondence relationship for the terminal,
where the first correspondence relationship is a correspondence relationship between a resource set and a DCI signaling type and used to determine a DCI signaling type of the DCI where the TCI state indication information is located; and the second correspondence relationship is a correspondence relationship between the resource set and a TRP and used to determine a transmission reception point (TRP) corresponding to the TCI state indication information.

In an embodiment, the TCI state indication information is used to indicate a TCI state or a TCI state group.

The method and apparatus provided by various embodiments of the present application are based on the same application concept. Since the principles of solving problems by the method and apparatus are similar, the above-mentioned apparatus for TCI state indication provided by the embodiments of the present application may implement all the method steps implemented by the above-mentioned method for TCI state indication embodiment performed by the base station and may achieve the same effect. Therefore, the implementation of the method and apparatus may refer to each other, and the repeated parts will not be repeated.

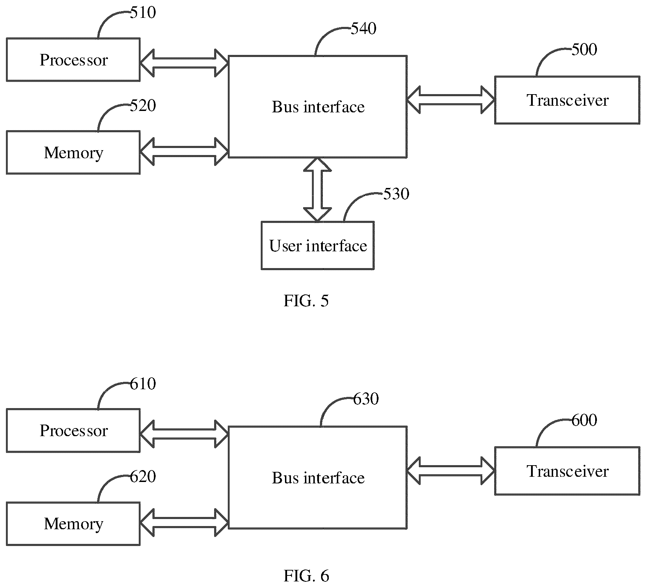

FIG. 5 is a schematic structural diagram of a terminal according to an embodiment of the present application. As shown in FIG. 5, the terminal includes a memory 520, a transceiver 500, and a processor 510, where the processor 510 and the memory 520 may also be arranged physically separately.

The memory 520 is used for storing a computer program, the transceiver 500 is used for receiving and transmitting data under control of the processor 510.

The transceiver 500 is used for receiving and transmitting data under the control of the processor 510.

In FIG. 5, a bus interface 540 may include any number of interconnected buses and bridges, which are connected together through various circuits of one or more processors represented by processor 510 and one or more memories represented by the memory 520. The bus interface 540 may also connect together various other circuits, such as peripherals, voltage regulators, and power management circuits, which are well known in the art, and therefore will not be further described in the present application. The bus interface provides an interface. The transceiver 500 may be multiple elements, i.e., including a transmitter and a receiver, units for providing communication with various other devices over transmission media including wireless channels, wired channels, fiber optic cables, and the like. For different terminals, the terminals may further include a user interface 530. The user interface 530 may also be an interface capable of externally or internally connecting the required equipment, and the connected equipment includes, but not limited to, a keypad, a display, a speaker, a microphone, a joystick, and the like.

The processor 510 is responsible for managing the bus architecture and general processing, and the memory 520 may store data used by the processor 510 in case that performing operations.

In an embodiment, the processor 510 may be a central processing unit (CPU), an application specific integrated circuit (ASIC), a field-programmable gate array (FPGA), or a complex programmable logic device (CPLD). The processor may also use a multi-core architecture.

The processor 510 is configured to perform operations corresponding to a method for transmission configuration indicator (TCI) state indication performed by a terminal provided by embodiments of the present application based on an obtained executable instruction by calling the computer program stored in the memory 520. The method includes:
receiving transmission configuration indicator (TCI) state indication information transmitted from a base station; and
updating a target state of a component carrier (CC) or a bandwidth part in a CC list based on the TCI state indication information,
where the CC list is pre-configured by the base station for the terminal, the CC list corresponds to multiple TCI states or multiple TCI state groups, a quantity of the CC list is one or multiple, and the target state of the CC or the bandwidth part includes: a TCI state of a CC, a TCI state group of a CC, a TCI state of a bandwidth part, or a TCI state group of a bandwidth part.

In an embodiment, the CC list includes any one or a combination of the following types:
a CC list configured for each transmission reception point (TRP) respectively;
a CC list configured based on a transmission reception point (TRP) transmission type corresponding to a CC or a bandwidth part; or
a CC list configured based on a downlink control information (DCI) mode.

In an embodiment, updating the target state of the CC or the bandwidth part in the CC list based on the TCI state indication information includes:
updating a target state of a CC or a bandwidth part corresponding to a transmission reception point (TRP) corresponding to the TCI state indication information based on the TCI state indication information.

In an embodiment, the CC or the bandwidth part in the CC list includes:
a CC or a bandwidth part in a single-downlink control information (S-DCI) mode; and/or
a CC or a bandwidth part in a multi-downlink control information (M-DCI) mode; and
where updating the target state of the CC or the bandwidth part in the CC list based on the TCI state indication information includes:
   in case that DCI where the TCI state indication information is located is S-DCI, updating a target state of a first CC or bandwidth part corresponding to the S-DCI, where the first CC or bandwidth part is a CC or a bandwidth part in the S-DCI mode in the CC list; or
   in case that DCI where the TCI state indication information is located is M-DCI, updating a target state of a second CC or bandwidth part corresponding to the M-DCI, where the second CC or bandwidth part is a CC or a bandwidth part in the M-DCI mode in the CC list.

In an embodiment, the operations further include:
determining a DCI signaling type of the DCI where the TCI state indication information is located based on a given first correspondence relationship and a resource set where the TCI state indication information is located; and/or
determining a transmission reception point (TRP) corresponding to the TCI state indication information based on a given second correspondence relationship and a resource set where the TCI state indication information is located,
where the first correspondence relationship is a correspondence relationship between the resource set and the DCI signaling type, and the second correspondence relationship is a correspondence relationship between the resource set and a TRP.

In an embodiment, the TCI state indication information is used to indicate a TCI state or a TCI state group.

In an embodiment, the TCI state indication information includes TCI single state indication information or TCI state group indication information,
where the TCI single state indication information is used to indicate one TCI state; and
the TCI state group indication information includes: uplink TCI state indication information and downlink TCI state indication information.

It should be noted here that the above-mentioned terminal according to the embodiments of the present application may implement all the steps implemented by the above-mentioned method embodiments for transmission configuration indicator (TCI) state indication performed by the terminal, and may achieve the same effect. The same parts and beneficial effects as the same method embodiments will not be repeated here.

FIG. 6 is a schematic structural diagram of a base station according to an embodiment of the present application. As shown in FIG. 6, the base station includes a memory 620, a transceiver 600, and a processor 610, where the processor 610 and the memory 620 may also be arranged physically separately.

The memory 620 is used for storing a computer program, and the transceiver 600 is used for receiving and transmitting data under control of the processor 610.

The transceiver 600 is used for receiving and transmitting data under the control of the processor 610.

In FIG. 6, a bus interface 630 may include any number of interconnected buses and bridges, which are connected together through various circuits of one or more processors represented by processor 610 and one or more memories represented by the memory 620. The bus interface 630 may also connect together various other circuits, such as peripherals, voltage regulators, and power management circuits, which are well known in the art, and therefore will not be further described in the present application. The bus interface provides an interface. The transceiver 600 may be multiple elements, i.e., including a transmitter and a receiver, units for providing communication with various other devices over transmission media including wireless channels, wired channels, fiber optic cables, and the like.

The processor 610 is responsible for managing the bus architecture and general processing, and the memory 620 may store data used by the processor 610 in case that performing operations.

In an embodiment, the processor 610 may be a central processing unit (CPU), an application specific integrated circuit (ASIC), a field-programmable gate array (FPGA), or a complex programmable logic device (CPLD). The processor may also use a multi-core architecture.

The processor 610 is configured to perform any one of operations corresponding to a method for transmission configuration indicator (TCI) state indication performed by a base station provided by embodiments of the present application based on an obtained executable instruction by calling the computer program stored in the memory 620. The method includes:
transmitting TCI state indication information to a terminal, where the TCI state indication information is used to indicate the terminal to update a target state of a component carrier (CC) or a bandwidth part in a CC list,
where the CC list is pre-configured by the base station for the terminal, the CC list corresponds to multiple TCI states or multiple TCI state groups, and the target state of the CC or the bandwidth part includes: a TCI state of a CC, a TCI state group of a CC, a TCI state of a bandwidth part, or a TCI state group of a bandwidth part.

In an embodiment, the CC list includes any one or a combination of the following types:
a CC list configured for each transmission reception point (TRP) respectively;
a CC list configured based on a transmission reception point (TRP) transmission type corresponding to a CC or a bandwidth part; or
a CC list configured based on a downlink control information (DCI) mode.

In an embodiment, the TCI state indication information is used to update a target state of a CC or a bandwidth part corresponding to a transmission reception point (TRP) corresponding to the TCI state indication information based on the TCI state indication information.

In an embodiment, the CC or the bandwidth part in the CC list includes:
a CC or a bandwidth part in a single-downlink control information (S-DCI) mode; and/or
a CC or a bandwidth part in a multi-downlink control information (M-DCI) mode; and
where in case that DCI where the TCI state indication information is located is S-DCI, the TCI state indication information is used to update a target state of a first CC or bandwidth part corresponding to the S-DCI, where the first CC or bandwidth part is a CC or a bandwidth part in the S-DCI mode in the CC list; or
in case that DCI where the TCI state indication information is located is M-DCI, the TCI state indication information is used to update a target state of a second CC or bandwidth part corresponding to the M-DCI, where the second CC or bandwidth part is a CC or a bandwidth part in the M-DCI mode in the CC list.

In an embodiment, the operations further include:
configuring a first correspondence relationship and/or a second correspondence relationship for the terminal,
where the first correspondence relationship is a correspondence relationship between a resource set and a DCI signaling type, and is used to determine a DCI signaling type of the DCI where the TCI state indication information is located; and the second correspondence relationship is a correspondence relationship between the resource set and a TRP, and is used to determine a transmission reception point (TRP) corresponding to the TCI state indication information.

In an embodiment, the TCI state indication information is used to indicate a TCI state or a TCI state group. In an embodiment, the TCI state indication information includes TCI single state indication information or TCI state group indication information,
where the TCI single state indication information is used to indicate one TCI state; and
the TCI state group indication information includes: uplink TCI state indication information and downlink TCI state indication information.

It should be noted here that the above-mentioned base station according to the embodiments of the present application may implement all the steps implemented by the above-mentioned method embodiments for transmission configuration indicator (TCI) state indication performed by the base station, and may achieve the same effect. The same parts and beneficial effects as the same method embodiments will not be repeated here.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as a separate product, it may be stored in a computer readable storage medium. Based on such understanding, the technical solutions of the present application in essence or a part of the technical solutions that contributes to the prior art, or all or part of the technical solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as U disk, mobile hard disk, read-only memory (ROM), random access memory (RAM), magnetic disk, or a compact disk.

An embodiment of the present application further provides a processor-readable storage medium storing a computer program, where the computer program is used to cause a processor to perform methods for transmission configuration indicator (TCI) state indication performed by the terminal provided by embodiments described above, which includes:
receiving TCI state indication information transmitted from a base station; and
updating a target state of a component carrier (CC) or a bandwidth part in a CC list based on the TCI state indication information,
where the CC list is pre-configured by the base station for the terminal, the CC list corresponds to multiple TCI states or multiple TCI state groups, a quantity of the CC list is one or multiple, and the target state of the CC or the bandwidth part includes: a TCI state of a CC, a TCI state group of a CC, a TCI state of a bandwidth part, or a TCI state group of a bandwidth part.

An embodiment of the present application further provides a processor-readable storage medium storing a computer program, where the computer program is used to cause a processor to perform methods for transmission configuration indicator (TCI) state indication performed by the base station provided by embodiments described above, which includes:
transmitting TCI state indication information to a terminal, where the TCI state indication information is used to indicate the terminal to update a target state of a component carrier (CC) or a bandwidth part in a CC list,
where the CC list is pre-configured by the base station for the terminal, the CC list corresponds to multiple TCI states or multiple TCI state groups, and the target state of the CC or the bandwidth part includes: a TCI state of a CC, a TCI state group of a CC, a TCI state of a bandwidth part, or a TCI state group of a bandwidth part.

The computer readable storage medium can be any available medium or data storage device that can be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

As will be appreciated by those skilled in the art, embodiments of the present application may be provided as a method, a system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means can perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. As such, provided that these modifications and variations of the present application fall within the scope of the claims of the present application and their equivalents, the present application is also intended to cover such modifications and variations.

## Claims

1. A method for transmission configuration indicator, TCI, state indication, performed by a terminal, comprising:
receiving TCI state indication information transmitted from a base station; and
updating a target state of a component carrier, CC, or a bandwidth part in a CC list based on the TCI state indication information,
wherein the CC list is pre-configured by the base station for the terminal, the CC list corresponds to multiple TCI states or multiple TCI state groups, a quantity of the CC list is one or multiple, and the target state of the CC or the bandwidth part comprises: a TCI state of a CC, a TCI state group of a CC, a TCI state of a bandwidth part, or a TCI state group of a bandwidth part.

2. The method of claim 1, wherein the CC list comprises any one or a combination of the following types:
a CC list configured for each transmission reception point, TRP, respectively;
a CC list configured based on a transmission reception point, TRP, transmission type corresponding to a CC or a bandwidth part; or
a CC list configured based on a downlink control information, DCI, mode.

3. The method of claim 1, wherein updating the target state of the CC or the bandwidth part in the CC list based on the TCI state indication information comprises:
updating a target state of a CC or a bandwidth part corresponding to a transmission reception point, TRP, corresponding to the TCI state indication information based on the TCI state indication information.

4. The method of any one of claims 1 to 3, wherein the CC or the bandwidth part in the CC list comprises:
a CC or a bandwidth part in a single-downlink control information, S-DCI, mode; and/or
a CC or a bandwidth part in a multi-downlink control information, M-DCI, mode; and
wherein updating the target state of the CC or the bandwidth part in the CC list based on the TCI state indication information comprises:
in case that DCI where the TCI state indication information is located is S-DCI, updating a target state of a first CC or bandwidth part corresponding to the S-DCI, wherein the first CC or bandwidth part is a CC or a bandwidth part in the S-DCI mode in the CC list; or
in case that DCI where the TCI state indication information is located is M-DCI, updating a target state of a second CC or bandwidth part corresponding to the M-DCI, wherein the second CC or bandwidth part is a CC or a bandwidth part in the M-DCI mode in the CC list.

5. The method of claim 4, further comprising:
determining a DCI signaling type of the DCI where the TCI state indication information is located based on a given first correspondence relationship and a resource set where the TCI state indication information is located; and/or
determining a transmission reception point, TRP, corresponding to the TCI state indication information based on a given second correspondence relationship and a resource set where the TCI state indication information is located,
wherein the first correspondence relationship is a correspondence relationship between the resource set and the DCI signaling type, and the second correspondence relationship is a correspondence relationship between the resource set and a TRP.

6. The method of any one of claims 1 to 3, wherein the TCI state indication information is used to indicate a TCI state or a TCI state group.

7. A method for transmission configuration indicator, TCI, state indication, performed by a base station, comprising:
transmitting TCI state indication information to a terminal, wherein the TCI state indication information is used to indicate the terminal to update a target state of a component carrier, CC, or a bandwidth part in a CC list,
wherein the CC list is pre-configured by the base station for the terminal, the CC list corresponds to multiple TCI states or multiple TCI state groups, and the target state of the CC or the bandwidth part comprises: a TCI state of a CC, a TCI state group of a CC, a TCI state of a bandwidth part, or a TCI state group of a bandwidth part.

8. The method of claim 7, wherein the CC list comprises any one or a combination of the following types:
a CC list configured for each transmission reception point, TRP, respectively;
a CC list configured based on a transmission reception point, TRP, transmission type corresponding to a CC or a bandwidth part; or
a CC list configured based on a downlink control information, DCI, mode.

9. The method of claim 7, wherein the TCI state indication information is used to update a target state of a CC or a bandwidth part corresponding to a transmission reception point, TRP, corresponding to the TCI state indication information based on the TCI state indication information.

10. The method of any one of claims 7 to 9, wherein the CC or the bandwidth part in the CC list comprises:
a CC or a bandwidth part in a single-downlink control information, S-DCI, mode; and/or
a CC or a bandwidth part in a multi-downlink control information, M-DCI, mode; and
wherein in case that DCI where the TCI state indication information is located is S-DCI, the TCI state indication information is used to update a target state of a first CC or bandwidth part corresponding to the S-DCI, wherein the first CC or bandwidth part is a CC or a bandwidth part in the S-DCI mode in the CC list; or
in case that DCI where the TCI state indication information is located is M-DCI, the TCI state indication information is used to update a target state of a second CC or bandwidth part corresponding to the M-DCI, wherein the second CC or bandwidth part is a CC or a bandwidth part in the M-DCI mode in the CC list.

11. The method of claim 10, further comprising:
configuring a first correspondence relationship and/or a second correspondence relationship for the terminal,
wherein the first correspondence relationship is a correspondence relationship between a resource set and a DCI signaling type, and is used to determine a DCI signaling type of the DCI where the TCI state indication information is located; and the second correspondence relationship is a correspondence relationship between the resource set and a transmission reception point, TRP, and is used to determine a transmission reception point, TRP, corresponding to the TCI state indication information.

12. The method of any one of claims 7 to 9, wherein the TCI state indication information is used to indicate a TCI state or a TCI state group.

13. A terminal, comprising a memory, a transceiver and a processor,
wherein the memory is used for storing a computer program, the transceiver is used for receiving and transmitting data under control of the processor, and the processor is used for reading the computer program in the memory and performing the following operations:
receiving transmission configuration indicator, TCI, state indication information transmitted from a base station; and
updating a target state of a component carrier, CC, or a bandwidth part in a CC list based on the TCI state indication information,
wherein the CC list is pre-configured by the base station for the terminal, the CC list corresponds to multiple TCI states or multiple TCI state groups, a quantity of the CC list is one or multiple, and the target state of the CC or the bandwidth part comprises: a TCI state of a CC, a TCI state group of a CC, a TCI state of a bandwidth part, or a TCI state group of a bandwidth part.

14. The terminal of claim 13, wherein the CC list comprises any one or a combination of the following types:
a CC list configured for each transmission reception point, TRP, respectively;
a CC list configured based on a transmission reception point, TRP, transmission type corresponding to a CC or a bandwidth part; or
a CC list configured based on a downlink control information, DCI, mode.

15. The terminal of claim 13, wherein updating the target state of the CC or the bandwidth part in the CC list based on the TCI state indication information comprises:
updating a target state of a CC or a bandwidth part corresponding to a transmission reception point, TRP, corresponding to the TCI state indication information based on the TCI state indication information.

16. The terminal of any one of claims 13 to 15, wherein the CC or the bandwidth part in the CC list comprises:
a CC or a bandwidth part in a single-downlink control information, S-DCI, mode; and/or
a CC or a bandwidth part in a multi-downlink control information, M-DCI, mode; and
wherein updating the target state of the CC or the bandwidth part in the CC list based on the TCI state indication information comprises:
in case that DCI where the TCI state indication information is located is S-DCI, updating a target state of a first CC or bandwidth part corresponding to the S-DCI, wherein the first CC or bandwidth part is a CC or a bandwidth part in the S-DCI mode in the CC list; or
in case that DCI where the TCI state indication information is located is M-DCI, updating a target state of a second CC or bandwidth part corresponding to the M-DCI, wherein the second CC or bandwidth part is a CC or a bandwidth part in the M-DCI mode in the CC list.

17. The terminal of claim 16, wherein the operations further comprise:
determining a DCI signaling type of the DCI where the TCI state indication information is located based on a given first correspondence relationship and a resource set where the TCI state indication information is located; and/or
determining a transmission reception point, TRP, corresponding to the TCI state indication information based on a given second correspondence relationship and a resource set where the TCI state indication information is located;
wherein the first correspondence relationship is a correspondence relationship between the resource set and the DCI signaling type, and the second correspondence relationship is a correspondence relationship between the resource set and a TRP.

18. The terminal of any one of claims 13 to 15, wherein the TCI state indication information is used to indicate a TCI state or a TCI state group.

19. A base station, comprising a memory, a transceiver and a processor,
wherein the memory is used for storing a computer program, the transceiver is used for receiving and transmitting data under control of the processor, and the processor is used for reading the computer program in the memory and performing the following operations:
transmitting transmission configuration indicator, TCI, state indication information to a terminal, where the TCI state indication information is used to indicate the terminal to update a target state of a component carrier, CC, or a bandwidth part in a CC list,
wherein the CC list is pre-configured by the base station for the terminal, the CC list corresponds to multiple TCI states or multiple TCI state groups, and the target state of the CC or the bandwidth part comprises: a TCI state of a CC, a TCI state group of a CC, a TCI state of a bandwidth part, or a TCI state group of a bandwidth part.

20. The base station of claim 19, wherein the CC list comprises any one or a combination of the following types:
a CC list configured for each transmission reception point, TRP, respectively;
a CC list configured based on a transmission reception point, TRP, transmission type corresponding to a CC or a bandwidth part; or
a CC list configured based on a downlink control information, DCI, mode.

21. The base station of claim 19, wherein the TCI state indication information is used to update a target state of a CC or a bandwidth part corresponding to a transmission reception point, TRP, corresponding to the TCI state indication information based on the TCI state indication information.

22. The base station of any one of claims 19 to 21, wherein the CC or the bandwidth part in the CC list comprises:
a CC or a bandwidth part in a single-downlink control information, S-DCI, mode; and/or
a CC or a bandwidth part in a multi-downlink control information, M-DCI, mode; and
wherein in case that DCI where the TCI state indication information is located is S-DCI, the TCI state indication information is used to update a target state of a first CC or bandwidth part corresponding to the S-DCI, wherein the first CC or bandwidth part is a CC or a bandwidth part in the S-DCI mode in the CC list; or
in case that DCI where the TCI state indication information is located is M-DCI, the TCI state indication information is used to update a target state of a second CC or bandwidth part corresponding to the M-DCI, wherein the second CC or bandwidth part is a CC or a bandwidth part in the M-DCI mode in the CC list.

23. The base station of claim 22, wherein the operations further comprise:
configuring a first correspondence relationship and/or a second correspondence relationship for the terminal,
wherein the first correspondence relationship is a correspondence relationship between a resource set and a DCI signaling type, and is used to determine a DCI signaling type of the DCI where the TCI state indication information is located; and the second correspondence relationship is a correspondence relationship between the resource set and a transmission reception point, TRP, and is used to determine a transmission reception point, TRP, corresponding to the TCI state indication information.

24. The base station of any one of claims 19 to 21, wherein the TCI state indication information is used to indicate a TCI state or a TCI state group.

25. An apparatus for transmission configuration indicator, TCI, state indication, for use in a terminal, comprising:
a first receiving unit, used for receiving TCI state indication information transmitted from a base station; and
a first updating unit, used for updating a target state of a component carrier, CC, or a bandwidth part in a CC list based on the TCI state indication information,
wherein the CC list is pre-configured by the base station for the terminal, the CC list corresponds to multiple TCI states or multiple TCI state groups, a quantity of the CC list is one or multiple, and the target state of the CC or the bandwidth part comprises: a TCI state of a CC, a TCI state group of a CC, a TCI state of a bandwidth part, or a TCI state group of a bandwidth part.

26. The apparatus of claim 25, wherein the CC list comprises any one or a combination of the following types:
a CC list configured for each transmission reception point, TRP, respectively;
a CC list configured based on a transmission reception point, TRP, transmission type corresponding to a CC or a bandwidth part; or
a CC list configured based on a downlink control information, DCI, mode.

27. The apparatus of claim 25, wherein updating the target state of the CC or the bandwidth part in the CC list based on the TCI state indication information comprises:
updating a target state of a CC or a bandwidth part corresponding to a transmission reception point, TRP, corresponding to the TCI state indication information based on the TCI state indication information.

28. The apparatus of any one of claims 25 to 27, wherein the CC or the bandwidth part in the CC list comprises:
a CC or a bandwidth part in a single-downlink control information, S-DCI, mode; and/or
a CC or a bandwidth part in a multi-downlink control information, M-DCI, mode; and
wherein updating the target state of the CC or the bandwidth part in the CC list based on the TCI state indication information comprises:
in case that DCI where the TCI state indication information is located is S-DCI, updating a target state of a first CC or bandwidth part corresponding to the S-DCI, wherein the first CC or bandwidth part is a CC or a bandwidth part in the S-DCI mode in the CC list; or
in case that DCI where the TCI state indication information is located is M-DCI, updating a target state of a second CC or bandwidth part corresponding to the M-DCI, wherein the second CC or bandwidth part is a CC or a bandwidth part in the M-DCI mode in the CC list.

29. The apparatus of claim 28, further comprising a first determining unit, wherein the first determining unit is used for:
determining a DCI signaling type of the DCI where the TCI state indication information is located based on a given first correspondence relationship and a resource set where the TCI state indication information is located; and/or
determining a transmission reception point, TRP, corresponding to the TCI state indication information based on a given second correspondence relationship and a resource set where the TCI state indication information is located,
wherein the first correspondence relationship is a correspondence relationship between the resource set and the DCI signaling type, and the second correspondence relationship is a correspondence relationship between the resource set and a TRP.

30. The apparatus of any one of claims 25 to 27, wherein the TCI state indication information is used to indicate a TCI state or a TCI state group.

31. An apparatus for transmission configuration indicator, TCI, state indication, for use in a base station, comprising:
a second transmitting unit, used for transmitting TCI state indication information to a terminal, where the TCI state indication information is used to indicate the terminal to update a target state of a component carrier, CC, or a bandwidth part in a CC list,
wherein the CC list is pre-configured by the base station for the terminal, the CC list corresponds to multiple TCI states or multiple TCI state groups, and the target state of the CC or the bandwidth part comprises: a TCI state of a CC, a TCI state group of a CC, a TCI state of a bandwidth part, or a TCI state group of a bandwidth part.

32. The apparatus of claim 31, wherein the CC list comprises any one or a combination of the following types:
a CC list configured for each transmission reception point, TRP, respectively;
a CC list configured based on a transmission reception point, TRP, transmission type corresponding to a CC or a bandwidth part; or
a CC list configured based on a downlink control information, DCI, mode.

33. The apparatus of claim 31, wherein the TCI state indication information is used to update a target state of a CC or a bandwidth part corresponding to a transmission reception point, TRP, corresponding to the TCI state indication information based on the TCI state indication information.

34. The apparatus of any one of claims 31 to 33, wherein the CC or the bandwidth part in the CC list comprises:
a CC or a bandwidth part in a single-downlink control information, S-DCI, mode; and/or
a CC or a bandwidth part in a multi-downlink control information, M-DCI, mode; and
wherein in case that DCI where the TCI state indication information is located is S-DCI, the TCI state indication information is used to update a target state of a first CC or bandwidth part corresponding to the S-DCI, wherein the first CC or bandwidth part is a CC or a bandwidth part in the S-DCI mode in the CC list; or
in case that DCI where the TCI state indication information is located is M-DCI, the TCI state indication information is used to update a target state of a second CC or bandwidth part corresponding to the M-DCI, wherein the second CC or bandwidth part is a CC or a bandwidth part in the M-DCI mode in the CC list.

35. The apparatus of claim 34, further comprising a third transmitting unit, wherein the third transmitting unit is used for configuring a first correspondence relationship and/or a second correspondence relationship for the terminal,
wherein the first correspondence relationship is a correspondence relationship between a resource set and a DCI signaling type and used to determine a DCI signaling type of the DCI where the TCI state indication information is located; and the second correspondence relationship is a correspondence relationship between the resource set and a transmission reception point, TRP, and used to determine a transmission reception point, TRP, corresponding to the TCI state indication information.

36. The apparatus of any one of claims 31 to 33, wherein the TCI state indication information is used to indicate a TCI state or a TCI state group.

37. A processor-readable storage medium storing a computer program, wherein the computer program is used to cause a processor to perform the method for transmission configuration indicator, TCI, state indication of any one of claims 1 to 6.

38. A processor-readable storage medium storing a computer program, wherein the computer program is used to cause a processor to perform the method for transmission configuration indicator, TCI, state indication of any one of claims 7 to 12.
